# EUROPEAN PATENT SPECIFICATION

(11) **EP 1 322 546 B1**
(45) Date of publication and mention of the grant of the patent: **05.09.2007**
(21) Application number: 01972854.2
(22) Date of filing: 28.09.2001
(51) Int. Cl.: B01L 3/00

(54) **MICROSCOPIC NETWORKS OF CONTAINERS AND NANOTUBES**
MIKROSKOPISCHE NETZWERKE VON BEHÄLTERN UND NANOROHREN
RESEAUX MICROSCOPIQUES DE CONTENANTS ET DE NANOTUBES

(30) Priority: 28.09.2000 SE 0003506
(43) Date of publication of application: 02.07.2003
(73) Proprietor: Nanoxis AB, 412 50 Göteborg (SE)
(72) Inventor: CHIU, Daniel, Seattle, WA 98115 (US); ORWAR, Owe, S-436 51 Hov s (SE); KARLSSON, Mattias, S-414 58 Göteborg (SE); KARLSSON, Roger, S-517 36 Bollebygd (SE); KARLSSON, Anders, S-517 36 Bollebygd (SE)
(74) Representative: Adam, Holger
(86) International application number: PCT/SE2001/002116
(87) International publication number: WO 2002/026616

(56) References cited:
- DONG SOO LEE ET AL.: 'Brief communications' NATURE vol. 409, January 2001, pages 149 - 152, XP001032087
- EVAN EVANS ET AL.: 'Biomembrane templates for nanoscale conduits and networks' SCIENCE vol. 273, August 1996, pages 933 - 935, XP002906878

## Description

### Field of the invention

The present invention relates to a method for the production of one-, two- or three-dimensional microscopic networks of containers and nanotubes, both said containers and said nanotubes being constituted of surfactant membranes, to such networks and to the use of such networks.

### Background of the invention

Biological and synthetic lipid bilayer vesicles display a fascinating repertoire of properties and specializations, and can undergo complex shape transitions upon appropriate physico-chemical stimulation¹⁻⁵. Examples are transformations from spherical-to-elongated-to-tethered vesicles after application of an axial load, thermally induced discocyte-to-somatocyte transitions, and osmotically-driven bud-formation, and fission. Lipid nanotubes can be formed from liposomes as intermediates in clathrin-mediated endocytosis⁶, from a wide range of lipids in bulk under osmotic stress^{1,2}, through self-assembly of tubule-forming lipids⁷⁻⁹, and from manipulation of individual liposomes using a pipette-aspiration technique^{4,10,11}.

Microstructures made from lipid bilayer materials are promising tools in a reductionist approach to understand complex cellular chemistry in compartments that approximates true cellular and organellar nanoenvironments¹²⁻¹⁶. Even if this field of research is just starting to develop, it has been shown that lipid bilayer microstructures have the potential to provide experimental models, for example, for testing single-enzyme oscillatory behaviors in small confined volumes¹⁷, as well as membrane tension-driven transport of single particles¹⁸.

### Summary of the invention

The present invention relates to a method for the production of a one-, two- or three-dimensional microscopic network of containers and nanotubes, according to claim 1, both said containers and said nanotubes being constituted of liquid-crystalline surfactant membranes, comprising partitioning of one mother container into two daughter containers in communication with each other through a nanotube, followed by partitioning of one of or both of the resulting daughter containers into new daughter containers, wherein the partitioning of daughter containers is repeated until a desired number of containers is obtained.

The present invention also relates to a method for the production of a one-, two- or three-dimensional microscopic network of containers, nanotubes, and nanotube junctions, also constituted of liquid-crystalline surfactant membranes comprising partitioning of one mother container into several daughter containers in communication with each other through nanotubes and nanotube junctions.

The present invention also relates to microscopic networks of containers and nanotubes obtainable by the above mentioned method.

Furthermore, the present invention relates to a microscopic network of at least two containers constituted of surfactant membranes and at least one nanotube constituted of surfactant membranes, said nanotube forming communication between said containers, according to claim 42.

Moreover, the present invention relates to different applications of said microscopic networks.

It is stated above that the containers and the nanotubes are constituted by at least one liquid-crystalline surfactant membrane. One example of such a surfactant membrane is the lipid bilayer membrane, which is the major constituent of biological membranes, e.g. the cell membrane. However, the containers and nanotubes may also be constituted by other amphiphilic molecules that self-organize into mono- or bilayers. Networks may thus be constructed from e.g. biological cells, biological organelles, liposomes or emulsions.

The sizes of the containers of the network are in the microscopic range, and they may vary in volume from 10⁻²¹ to 10⁻³ liters.

The sizes of the nanotubes of the network are in the nanoscopic or microscopic range, and they may vary from 0.05 to 100,000 µm in length and from 0.001 to 1000 µm in diameter.

The networks according to the invention or the networks produced by the method according to the invention are preferably heterogeneous.

The containers may have several different forms, depending on the material constituting them and on the environment. They may, for example, be essentially spherical, hemispherical, elliptical or shaped as a convex lens.

When producing a network with the above mentioned method, the mother container and the daughter containers should preferably be immobilized by some means in order to prevent the containers within a network to spontaneously fuse together.

When the network to be produced with the above mentioned method is a two-dimensional network, the containers in a network are preferably placed onto a planar substrate that, due to physico-chemical interactions between the substrate and the containers, firmly immobilizes the containers. Suitable substrates are, for example, borosilicate surfaces, silicon dioxide surfaces, oxidized polystyrene-coated surfaces, poly-L-lysine-coated surfaces, protein-coated surfaces, antibody-coated surfaces, metal surfaces, and surfaces covered with a self-assembled monolayer (SAM). It is also possible to use a variety of micropatterned surfaces of different topography.

When the network to be produced with the above mentioned method is a three-dimensional network, the containers are preferably immobilized onto a topographically designed substrate. Alternatively, the network is constructed in a supportive matrix, such as a gel, for example a highly viscous hydrogel. Three-dimensional networks can also be created by solidifying the networks when individual units are held at predetermined three-dimensional coordinates with scaffolds or microfibers controlled by micromanipulators. Solidification or solid casts of the networks can then be made by metalization^{7,8}, silication¹⁹, polymerization²⁰, and protein-crystalization⁹.

The partitioning of the mother container and subsequent partitioning of daughter containers are preferably accomplished according to one of the following embodiments.

According to the first embodiment the partitioning of the containers is performed through mechanical fission essentially through the whole mother container. The nanotube is formed by the non-cleaved material of the mother container. Said mechanical fission is preferably performed through the use of a fiber. The fiber shall be flexible and of small size and sufficient length, i.e. longer than the diameter of the container. It shall also have minimal interaction with and/or adhesion to the container. Furthermore, it shall preferably be chemically inert, and even more preferably be placed at an electrical potential before or during use. A preferred example of such a fiber is a carbon fiber. After mechanical fission the length of the formed nanotube may be increased by movement of the fiber, which results in pulling one container away with respect to the other. The fiber can also be used to control the angles between the nanotubes. This angle is accomplished by moving a newly formed daughter container with the fiber until the desired angle is obtained. Finally, the fiber may be used to adjust the relative sizes of the two daughter containers, by careful positioning of the fiber before the mechanical fission. For example, the partitioning may be performed along the equator of the mother container resulting in homofission or along a latitude other than the equator of the mother container resulting in heterofission. The diameter of the nanotubes is governed by the membrane composition and the surface tension of the network and can thus be regulated by controlling the above mentioned parameters.

According to the second embodiment, the partitioning of the containers is performed through the use of a micropipette aspiration technique wherein at least one liquid-filled micropipette is used to pull the mother container into daughter containers which are in communication with each other through a nanotube. The tip of said micropipette is positioned in close contact with the membrane surface of said mother container and a part of the said mother container is aspirated into said micropipette. Said micropipette is then moved in a direction from the mother container, part of said mother container being retained in its original position due to adherence to said substrate while the other part of said mother container forms a daughter container and a nanotube connecting said mother container and said daughter container, whereupon the newly formed daughter container is released from said micropipette. Alternatively, the entire mother container is aspirated, or back filled, into the liquid-filled micropipette and partitioning of containers is performed by ejecting a part of the said mother container from the said micropipette, thus forming a bulbous structure at the tip of said micropipette. Said bulbous structure is allowed to adhere to said substrate through axial translation of the said micropipette which then is moved in a direction from said bulbous structure of the said mother container, being retained due to adherence to said substrate thus forming a daughter container and a nanotube connecting said daughter container and said mother container, whereupon the said mother container is released from said micropipette.

When this second embodiment is used the partitioning may be either homofission or heterofission.

According to the third embodiment the partitioning of the containers is performed through the use of an electroinjection or a microinjection technique wherein at least one liquid-filled micropipette is used to pull the mother container into daughter containers, which are in communication with each other through said nanotube, wherein the tip of said at least one micropipette is inserted, by penetrating the membrane wall, into said mother container and then is moved in a direction from the mother container while or whereupon liquid is preferably injected through said micropipette, said liquid flowing into said nanotube forcing it to expand, thus forming a container at the outlet of the micropipette tip, part of said mother container being retained in its original position due to adherence to said substrate while the other part of said mother container forms a daughter container and a nanotube connecting said mother container and said daughter container, whereupon said micropipette is withdrawn from the newly formed daughter container.

The electroinjection is preferably performed through the use of at least one transient dc-voltage pulse applied through said at least one micropipette for penetration of the lipid bilayers of the containers. More preferably said dc-voltage pulse has a rectangular pulse shape of field strength of 0,1 to 4000 V/cm and duration of 1 to 10 000 µs.

Also when this third embodiment is used the partitioning may be either homofission or heterofission.

The networks produced by any of the embodiments describe above are denoted as open networks because all pathways end with a container. Such networks can be transformed into closed or circular networks by fusing two or several pairs of network-ending containers together. Furthermore, several (i.e. from two to many hundreds or thousands) networks produced as describe above may be fused together in order to produce a large network consisting of microscopic and nanoscopic components. These fusions may be performed with any suitable method, such as microelectrofusion.

It is also possible to merge two or more containers connected by nanotubes within a network. Merging two adjoining containers may simply be performed by pushing them together, e.g. through the use of a micropipette or microfiber.

Once the networks are formed, or during formation of them, it is possible to alter the membrane composition and/or content of individual containers within the network. This may e.g. be done by a photochemical technique, an electrochemical technique, a microelectroinjection technique, and/or an electrofusion or electroporation technique.

It is also possible to alter the content of the containers by transportation of substances from one container to another through the connecting nanotube. The transportation may be performed by electrophoresis and/or electroosmosis of charged particles through the nanotube when an electric potential difference is applied to the containers to which the nanotube is connected, or on the basis of differences in membrane surface tension between the different containers to which the nanotubes are connected, which causes e.g. membrane material to migrate from the container with the lower surface tension to the one with the higher surface tension, which in turn causes shear-driven movement of the fluid contained inside the nanotube.

For example, it is possible to transport charged or uncharged particles contained in one container to another container by influence of an electric field on the connecting nanotube. It is also possible to transport particles from one container to another by adjustment of the membrane surface tension.

Surfactant membranes composed of phospholipids can self-assemble into spherical bilayer bodies (liposomes) a few nm to several mm in diameter that can be functionalized with membrane-bound and soluble proteins, and thus be tailored for a variety of sensor applications. As examples, ion-channels, and photosynthesis machinery have been reconstituted in liposomes thereby serving as chemical drug-screening²¹, and light-responsive devices²².

An intriguing aspect is that surfactant membrane structures can be used for ultra-small scale device design with potential applications in microfluidic, microelectronic, or microelectromechanical systems, as well as in biological and chemical computers. This is possible provided that the architecture and topology of these systems can be carefully manipulated and controlled. Simple systems such as planar lipid bilayer membranes, liposomes and lipid nanotubes have been used as templates for construction of metal^{7,8}, silica¹⁹, polymer²⁰, and protein-crystal solid-state structures⁹. Thus, templates made from surfactant membranes can be converted, using appropriate technologies into solid state devices.

A limiting issue both in complex solid-state device design, and in mimicking higher order cellular architectures, and networks, is the difficulty to control and produce fluid membrane structures of desired architecture on the µm- and nm-scale. For network constructions it is essential to control the connectivity between individual units, and for complex cellular design, both topology, connectivity, and sequence-specific loading of contents (reaction systems and organelle-mimetic structures) must be controlled.

The ability to achieve precise control of such networks might also have applications in cell-network-based computation. Although it is difficult to predict whether or not highly parallel cell-network-based computation ever will rival classical computation, or the upcoming parallel methods of DNA, and quantum computation, such systems will most likely become valuable for certain types of applications. Areas likely to build on cell-based computation are pattern recognition, and multi-modal stimuli processing. As such they might become interesting for robotics-control systems, and complex sensor applications. Experiments on pattern recognition by chemical kinetics have already shown promising results^{23,24}.

Another extremely important future area for cell-solid-state structures is implantable devices for replacing or supporting functions of misfunctional biological systems. Many chronic diseases in the nervous system, such as Alzheimer's, Huntington, and Parkinson's results in nerve-cell degeneration. Nerve cells do not have the capacity for regeneration and such disorders are practically incurable today even though important and promising results have been obtained using grafted tissues, and various drug-treatments. It is conceivable that artificial cell-networks can repair or at least ameliorate some of these distorted functions. Also, cell-solid-state devices could be made to mimic retinal and olfactory sensory functions, thus act as artificial eyes and artificial noses.

The networks according to the invention or networks produced according to the invention have many different applications, based mainly on their function as ultrasmall-scale fluidic, reaction and mechanical devices. They may e.g. be used in a microelectronic system, in a microelectromechanical system, in a microfluidic system, for the construction of a metal, silica, polymer and/or protein-crystal solid-state structure, as models for the study of cellular chemistry in compartments, as biomimetic models of biological multicompartment architectures, as cellular circuits, as artificial neuronal networks, as templates for solid-state nanostructures, in a biological or chemical computer, in a microanalytical system, in a sensor, or in the creation of an artificial cell or an implantable device.

### Brief description of the drawings

In the description and the examples below, reference is made to the appended drawings in which:

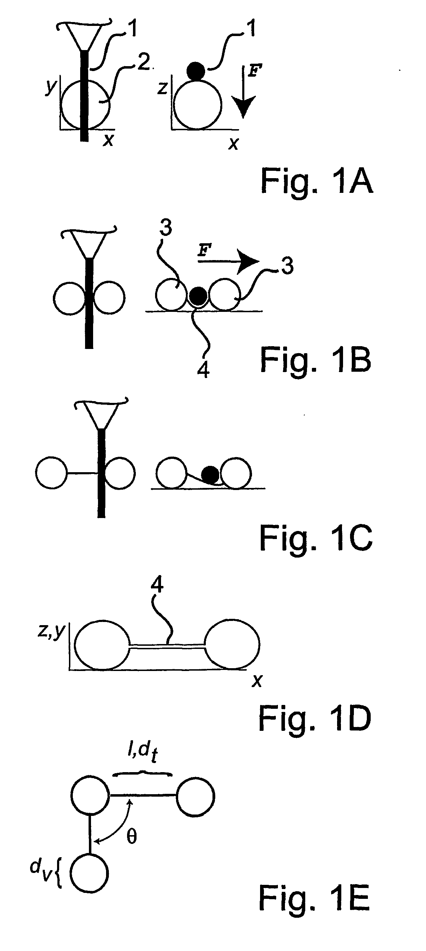

Fig. 1 is a schematic drawing showing the mechanical fission and nanotube-formation process; Fig. 1 A shows a mother container which is cleaved with a carbon fiber; Fig. 1 B shows how the fiber cleaves the mother container all the way down to the surface of a glass cover slip, leaving a small tube connection between the separated daughter containers; Fig. 1 C and Fig. 1 D show how the nanotube is elongated through movement of the fiber in the x-direction; and Fig. 1 E shows schematically that the length of the tubes, 1, the daughter containers diameter, dᵥ, and the angle θ between two nanotube extensions is freely variable using the mechanical fission and translation technique, and that the tube diameters, dₜ, can be controlled, for example, by controlling the membrane composition or tension of the system.

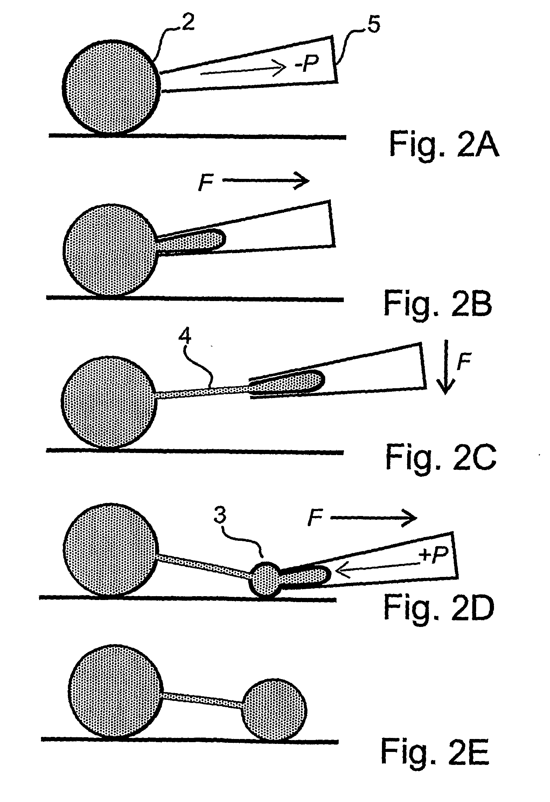

Fig. 2 is a schematic illustrating the formation of a nanotube-vesicle network by the micropipette-aspiration-based partitioning technique. A micropipette tip is first positioned in close contact to a mother container (2 A). By application of a negative pressure (suction) onto the micropipette, a part of the mother container is aspirated into the pipette (2 B). As the micropipette is slowly drawn away from the mother container to a desired location, the part aspirated into the pipette disconnects from the mother container and forms a daughter container connected to the mother via a nanotube (2 C).Thus, by controlling the amount of membrane aspirated, the size of the daughter container can be set. By axial translation of the micropipette and release of the aspiration pressure, the daughter container encompassed inside the micropipette is brought into contact with, and allowed to settle onto the substrate (2 D). Once the daughter container of desired diameter and location has firmly attached to the substrate, the micropipette tip is withdrawn (2 E).

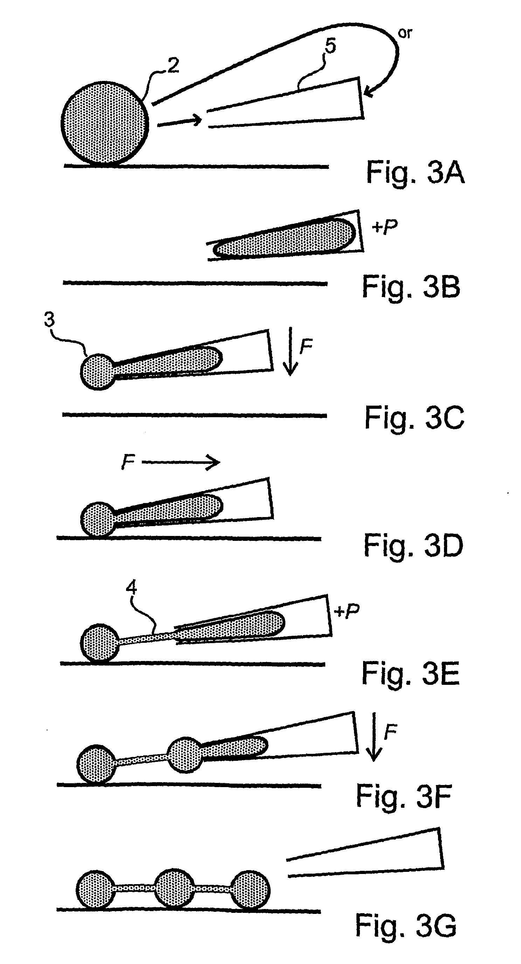

Fig. 3 is a schematic illustrating an alternative method for creating large networks using the micropipette aspiration based partitioning technique. When using this approach, the mother containers are aspirated, or backfilled into the micropipette (3 A). By partial application of a positive injection pressure, a part of the container encompassed in the micropipette is carefully released and a bulbous structure is formed at the outlet of the micropipette (3 B). At a target location, the bulbous structure is brought in contact with the substrate by negative axial translation of the micropipette (3 C). The bulbous structure is allowed to adhere to the substrate, forming a surface-immobilized daughter container connected by a lipid nanotube to the aspirated mother container encompassed in the micropipette (3 D). The micropipette is then moved to a new target location by axial and lateral translation away from the newly formed daughter container. Consequently, the size of the daughter container is set by controlling the size of the bulbous structure. This stepwise release of the mother container and subsequent surface immobilization procedure is repeated resulting in new daughter containers until a desired number of containers is obtained (3 E-F).

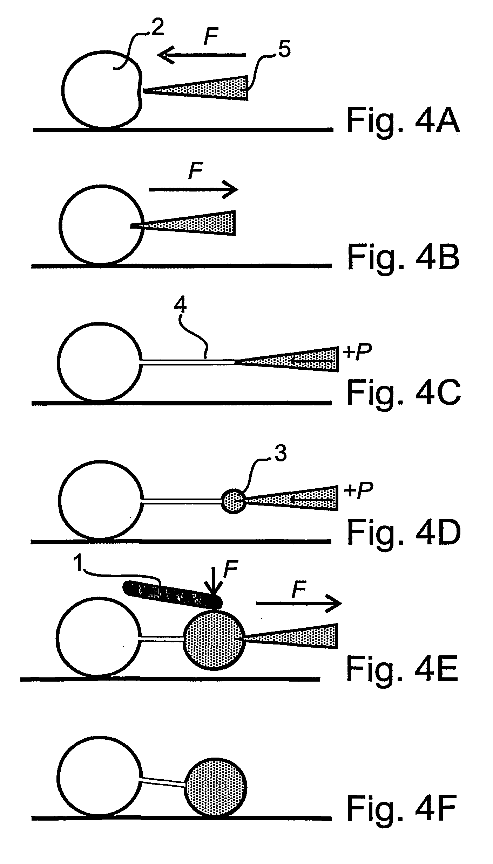

Fig. 4 is a schematic illustrating the formation of a nanotube network with micropipette-assisted formation of daughter containers. A micropipette tip is first electroinjected or by other means inserted into the mother container (4 A), and is slowly drawn away from the mother container to a desired location (4 B, 4 C). Solution is injected into the micropipette tip to inflate and form a daughter container of a desired size (4 D, 4 E). Once a daughter container of desired diameter and location is formed and has firmly attached to the substrate, the micropipette tip is withdrawn. This withdrawal of the micropipette can be aided by a carbonfiber electrode or another micropipette, pressing the container (4 E, 4 F) to the substrate.

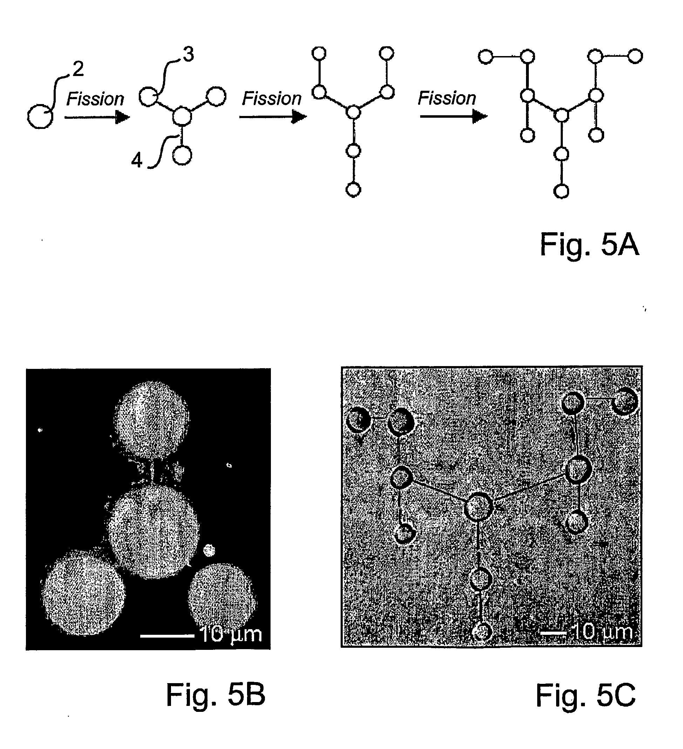

Fig. 5 A is a schematic drawing showing how a complex structure of eleven liposome containers connected by ten nanotubes is created through repetitive fission, starting from a large mother container; Fig. 5 B is a fluorescence image of the intermediate structure in Fig. 5 A; Fig. 5 C is a photomicrograph taken under bright-field illumination of the final structure; since the nanotubes are not visible using bright field microscopy, lines have been drawn between the connected liposomes to show where they are positioned.

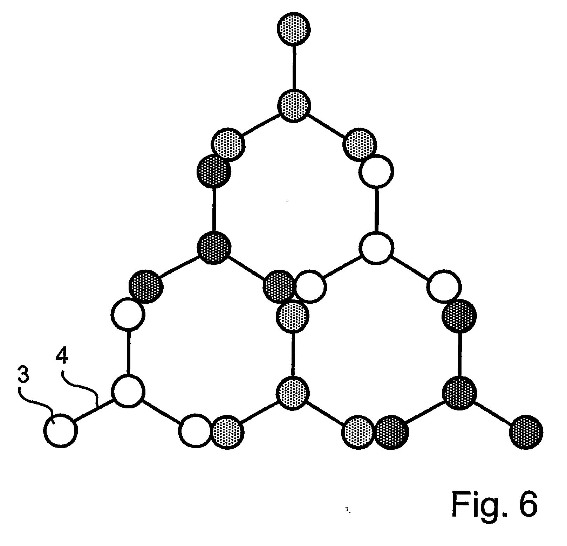

Fig. 6 is a schematic drawing of how a network of containers can be created by repetitive fission of several adjacent containers.

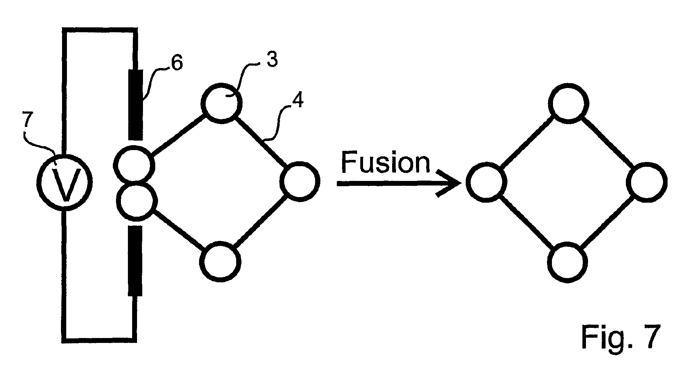

Fig. 7 is a schematic drawing of how closed structures of containers and interconnecting nanotubes can be formed by electrofusion of network-terminating containers.

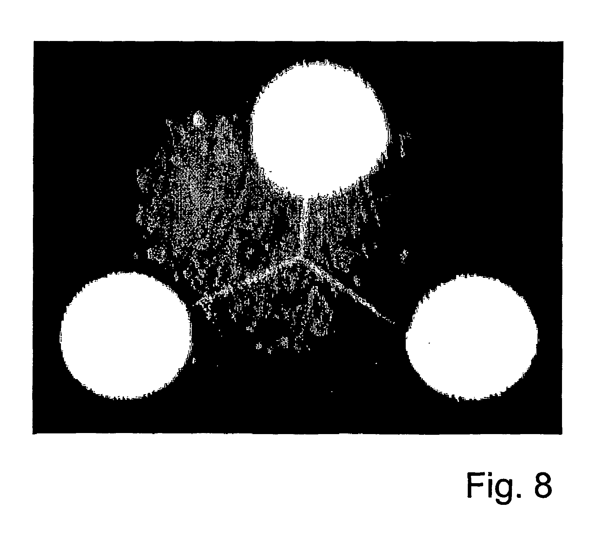

Fig. 8 is a photomicrograph taken in fluorescence showing a three-way nanotube junction connecting three liposomes.

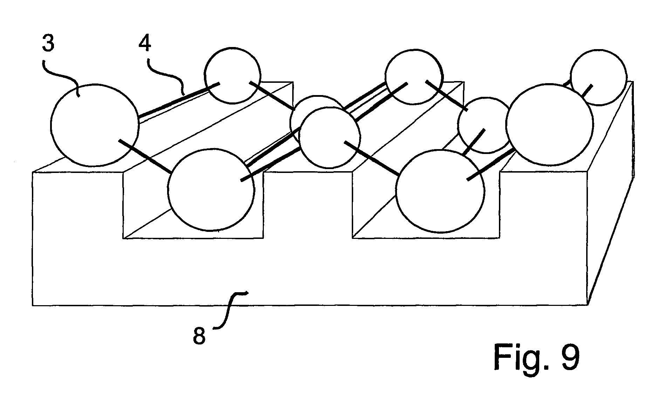

Fig. 9 is a schematic showing a three-dimensional network of containers interconnected by nanotubes. The three-dimensional arrangement is achieved by making the network on a topographically ordered substrate.

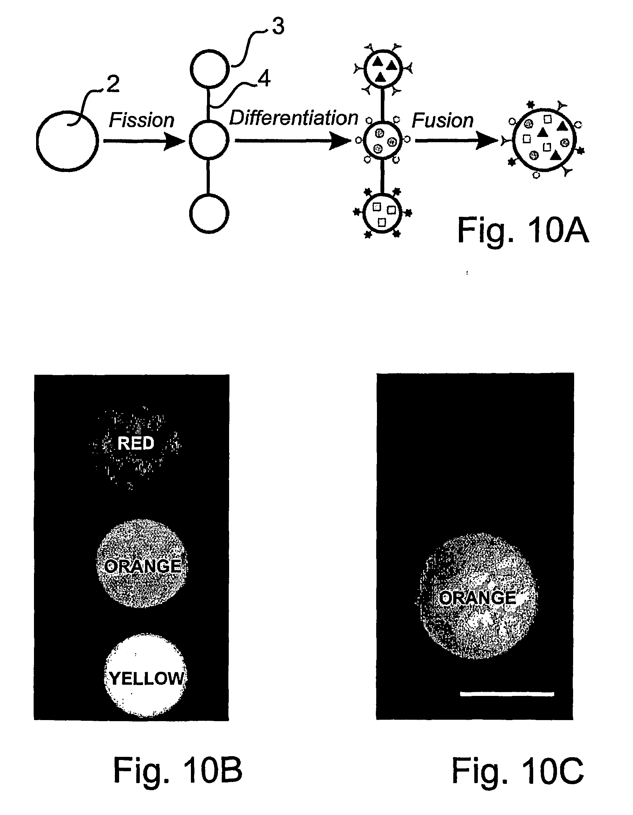

Fig. 10 A is a schematic drawing showing differentiation of the chemical composition of individual containers in a network, wherein the daughter containers -the membrane composition or contents of which have been altered through photochemical, electrochemical, microelectroinjection and electrofusion techniques- can be sequentially merged to mix the reagents and initiate reactions; Fig. 10 B shows a single soy bean lecithin liposome divided into three daughter liposomes, note that the connecting nanotubes are invisible in this micrograph; Fig. 10 C shows the result of fusion of the three liposomes of Fig. 10 B (the two colors were detected using separate channels, and has in this black and white representation been labeled with their fluorescence colors i.e. red, orange, and yellow; the scale bar represents 10 µm).

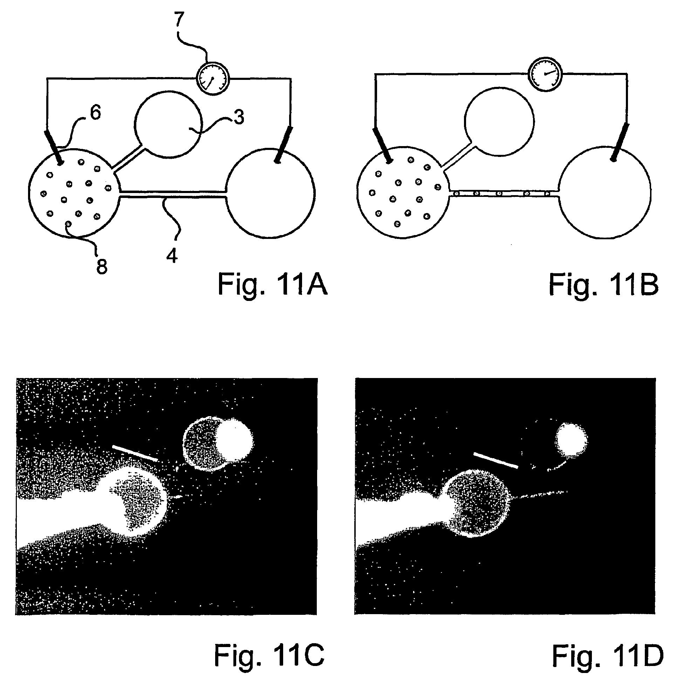

Fig. 11 shows electrophoretic migration of charged nanobeads inside a single-walled lipid nanotube; Fig. 11 A shows how a unilamellar liposome was injected with a solution containing fluorescent beads, upon which a nanotube was produced through mechanical fission and was thereby connected to another liposome (out of the picture) and a second nanotube was produced in the same way and was thereby connected to the liposome on the upper right of the figure; Fig. 11 B shows how the negatively charged beads moved into the nanotube by application of an electric field parallel to the nanotube long axis between two of the liposomes using the microelectrodes; Fig. 11 C and Fig. 11 D, respectively, show the corresponding CCD images in fluorescence (the white arrow indicate where the second nanotube is located).

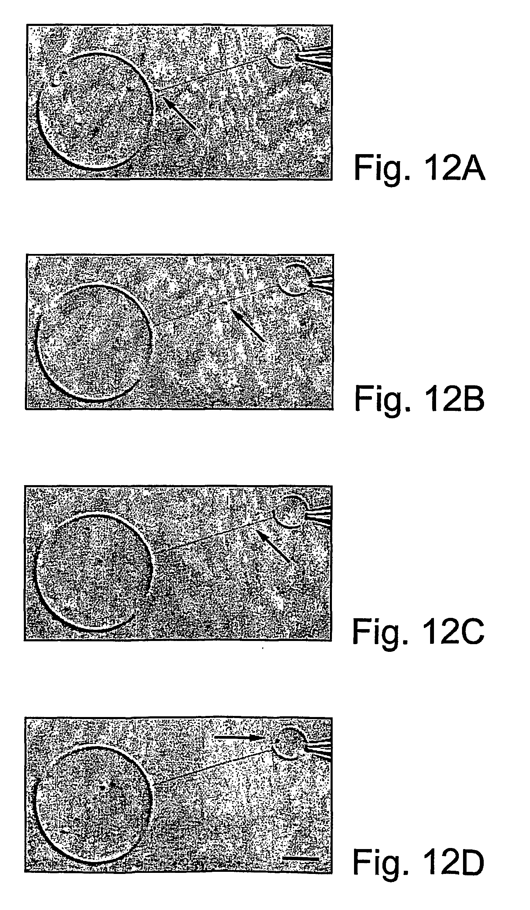

Fig. 12 shows material transport through nanotubes by controlling the membrane tension of the liposomes to which the nanotube is attached. Injection of solution, through the micropipette, into the liposome at the upper right corner of the figure (12 A) causes an increase in membrane surface tension in the liposome. This increase in membrane tension causes the small particle (arrow) in the nanotube to move towards the liposome with the higher membrane tension (12 B-C) until it reaches and enters the liposome (12 D).

### Detailed description of the invention

As stated above, the present invention relates to the concept of heterogeneous and complex microscopic networks of surfactant membrane, e.g. lipid-bilayer membrane, nanotubes and containers on hydrophilic or any other suitable substrates. The produced networks have controlled connectivity, container size, nanotube length, nanotube diameter, and angle between nanotube extensions. The present invention also relates to three methods for forming said networks of nanotubes and containers, to the types of said networks that can be formed, to two methods for transporting materials through said networks, and to the application of said networks.

Said three methods for forming networks of containers and nanotubes, in combination with microelectrofusion, provide a tool for the production of gigantic networks, as well as for construction of closed or circular networks. It is also possible to merge two or more containers connected by nanotubes within a network.

Complex system networks of nanotubes and containers offers interesting new models for studies of single-molecule behaviours²⁵, synchronized population behaviors of single enzymes in confined spaces¹⁷, and diffusible behaviors of biological molecules^{15,16}. Because organelles and organelle-mimetic structures can be electroinjected into the containers in a network, and such differentiated containers can be recombined, this system can not only model complex biological multicompartment structures, but also control the initiation of reaction. Such systems will be useful for studies of complex signaling systems.

Furthermore, these systems might be useful for construction of cellular circuits, artificial neuronal networks designed for computational tasks, and as ultra small-scale chemical separation and filtration devices. Since these networks can be utilized as templates for nanoscale microstructures and be transformed into solid-state devices, future applications of the presented technique seems to open up interesting opportunities in this area of research.

The first method for the formation of networks of nanotubes and containers is shown in Fig. 1. The left panels represent axial views (top views) and the right panels lateral views (side views) of the formation process. According to the first method of the invention one mother container is cleaved by mechanical fission essentially through the whole mother container (2) with a carbon fiber (1). The carbon fiber is preferably between 0.05 and 100 µm in diameter and controlled by a micromanipulator, preferably, a high-graduation micromanipulator that, preferably, can be translated in increments of 0.05-to-5 µm in all three dimensions. The technique is not limited to the use of carbon fibers, other materials of suitable small size and with suitable mechanical and surface properties can be used. It is sometimes advantageous to optimize the interaction between the fiber and the container surface, by modifying the surface of the fiber. Fig. 1 B shows how the fiber cleaves the container all the way down to the surface of a glass cover slip, resulting in two daughter containers (3) in communication with each other through a nanotube (4), said nanotube being formed by the non-cleaved material of the mother container. The, usually, spherically or hemispherically (surface interactions dictates the shape) shaped containers may either be cleaved essentially along their equator, resulting in homofission, or along any other latitude, resulting in heterofission. In heterofission, differently sized daughter containers will be obtained. Fig. 1 C shows how the nanotube is elongated through movement of the fiber in the x-direction. To adjust the length of a nanotube produced through fission, the carbon fiber may be moved in a direction parallel to the long axis of the nanotube to increase the distance between the two containers connected to the nanotube, and thus also the length of the nanotube.

There is an inverse relationship between the nanotube radius¹¹ and the membrane tension of the system. The coefficient that relates the nanotube radius (rₜ) to the membrane tension (τₘ) is the membrane bending modulus (B) according to; rₜ² = B/*τ*ₘ where the bending modulus is depending on membrane composition. Thus, by controlling the membrane tension and/or the membrane composition, the diameter of the lipid bilayer tubes, dₜ, can be set¹¹.

Fig 1 D shows two daughter containers connected by a nanotube (4) after the carbon fiber has been removed. Fig. 1 E shows schematically that the length of the tubes,1, the daughter container diameter, dᵥ, and the angle θ between two nanotube extensions is freely variable using the vesicle fission/translation technique. The tube diameters, dₜ, can be controlled, for example, by controlling the overall membrane tension of the system by utilizing a micromanipulation system for inducing a shape deformation within the network. Such shape deformations alters the surface-to-volume ratio and thus the membrane surface tension of the network; the higher membrane tension the thinner the nanotube. Consequently, the network tube diameters can be precisely controlled.

To create a larger network, the fission and daughter container translation is repeated for one or both of the daughter containers to make new daughter containers, wherein the mechanical fission of daughter containers is repeated until a desired number of containers is obtained. This first method is particularly suited for multilamellar containers.

The second method for formation of networks of nanotubes and containers is schematically shown in Fig. 2, and is based on mechanical partitioning of containers by a micropipette aspiration technique. This technique is suitable for multilamellar as well as unilamellar containers. This second method comprises the use of a micropipette (5) the tip of which is positioned next to a vesicular structure (2). The glass micropipette is controlled by a micromanipulator, preferably, a high-graduation micromanipulator that, preferably, can be translated in increments of 0.05-to-5 µm in all three dimensions. The micropipette can be made from pulled glass-capillaries, or any other suitably shaped object, and can be surface-modified to control the interaction between the micropipette and the container. The micropipette is filled with aqueous buffer or other suitable media. The micropipette is connected to a microinjection/aspiration system (not shown in Fig. 2), such as a pressurized microinjector or a voltage supply for the ionophoretic, electrophoretic, or electroosmotic delivery or sampling of materials. Preferably, a microinjector (Eppendorf CellTram Oil, or similar piece of equipment from other manufacturer) is set with an compensation pressure high enough to counterbalance the capillary forces of the micropipette. After the micropipette tip has been positioned next to a mother container (Fig. 2 A), a part of said container is aspirated into the tip of the micropipette by the application of a negative pressure (suction) in the injection/aspiration system (Fig. 2 B). The micropipette is withdrawn such that the aspirated part contained in the micropipette partly disconnects from the mother container, resulting in the formation of a daughter container encompassed inside the micropipette, and a membrane nanotube (4) connecting the mother container and the newly formed daughter container (Fig 2 C). Consequently the size of the daughter container is determined by the amount aspirated into the micropipette. The daughter container formed in this way is then attached to the substrate surface by axial translation of the micromanipulator-controlled micropipette towards the substrate and gently releasing the aspirated part of the mother container by applying a positive pressure onto the injection/aspiration system (Fig. 2 D). After the daughter container has settled firmly on the substrate surface, the micropipette tip is removed from the daughter container by pulling (Fig. 2 E). As with the first method for producing networks of nanotubes and containers using mechanical fission, as described above, this method can control the length of the tubes, 1, the daughter liposomes diameter, dᵥ, and the angle θ between two nanotube extensions, and that the tube diameters, dₜ, can be controlled, for example, by regulating the overall membrane surface tension of the network. Thus, the different parameters shown in Fig. 1 E can also be freely varied with this micropipette aspiration based partitioning technique.

To create larger networks with the micropipette aspiration method, aspiration of the mother container and the subsequent formation of daughter-vesicles were repeatedly performed on a single mother-vesicle, thus generating a network consisting of several daughter vesicles connected to a common mother container. As illustrated in Fig. 3, large networks can also be formed by aspiration of an entire vesicle into the micropipette (Fig. 3 A-B). Alternatively, the mother container, or a dispersion of mother containers, is loaded into the micropipette from its back end, so called back-filling. This procedure would be especially suitable for two-phase systems (emulsions), where one phase is back-filled into the micropipette and the other phase is constituted of the external medium. By partial application of a positive injection pressure, a part of the container encompassed in the micropipette is carefully released and a bulbous structure is formed at the outlet of the micropipette (Fig. 3 C). At a target location, the bulbous structure is brought in contact with the substrate by axial translation of the micropipette (Fig. 3 D). The bulbous structure is allowed to adhere to the substrate, forming a surface-immobilized daughter container connected by a lipid nanotube to the aspirated mother container encompassed in the micropipette (Fig. 3 E). The micropipette is then moved to a new target location by axial and lateral translation away from the newly formed daughter container. Consequently, the size of the daughter container is set by controlling the size of the bulbous structure. This stepwise release of the mother container and subsequent surface immobilization procedure is repeated resulting in new daughter containers until a desired number of containers is obtained (Fig. 3 F-G).

The third method for formation of networks of nanotubes and containers is schematically shown in Fig. 4, and is based on inflation of nanotubes pulled from a mother container with aqueous media, or any other suitable media, from a micropipette. This technique is especially suitable for unilamellar containers. This method comprises the use of a micropipette (5) the tip of which is inserted into a vesicular structure (2). The glass micropipette is controlled by a micromanipulator, preferably, a high-graduation micromanipulator that, preferably, can be translated in increments of 0.05-to-5 µm in all three dimensions. The micropipette can be made from pulled glass-capillaries, or other suitably shaped object, and can be surface-modified to optimize the interaction between the micropipette tip and the mother container. The micropipette is filled with aqueous buffer or other suitable media, and when electroinjection is used it also contains an electrode. The micropipette is connected to a microinjection system (not shown in Fig. 4), such as a pressurized microinjector or a voltage supply for the ionophoretic, electrophoretic, or electroosmotic delivery of materials suspended or dissolved in aqueous solution into the containers. Preferably, a microinjector (Eppendorf Femtojet or similar piece of equipment from other manufacturer) is set in continuous flow mode with a compensation pressure high enough to counterbalance the capillary forces of the micropipette. After the micropipette tip has been inserted into the mother container (Fig 4 B), the membrane of said container is allowed to reseal around said micropipette tip. The said micropipette is withdrawn such that the adhered membrane does not disconnect, thereby resulting in the formation of a nanotube (4) between said mother container and said micropipette tip. The diameter of the nanotube, dₜ, formed may be controlled through regulation of the membrane composition and/or by controlling the overall membrane surface tension of the network; the higher membrane tension the thinner the nanotube. The injection is then started either by pressure or electrically driven injection such that aqueous solution flows into said nanotube and forces it to expand, thus forming a vesicle (3) at the outlet of the micropipette tip (Fig. 4 D). It is possible to use solutions with different compositions for formation of different daughter containers in order to differentiate the contents of the containers. The daughter container formed in this way is then attached to the surface by gently translating the micromanipulator-controlled micropipette towards the surface (Fig. 4 E). It is also possible to press the daughter container against the surface using a micromanipulator-controlled microfiber (1) as shown in Fig. 4 E. After the daughter container has settled firmly on the surface, the micropipette tip is removed from the daughter container by pulling (Fig. 4 E). It is also sometimes advantageous to apply a small electric potential to the micropipette tip while removing it from the daughter container.

As with the first two methods for producing networks of nanotubes and containers, as described above, this method can control the length of the tubes, 1, the daughter container diameter, dᵥ, and the angle θ between two nanotube extensions. Thus, the different parameters shown in Fig. 1 E can also be freely varied with this micropipette-assisted nanotube-inflation technique.

To create larger networks with the nanotube inflation method, the procedure is repeated resulting in new daughter containers until a desired number of containers is obtained.

In all three methods, the starting material for the formation of a network is a mother container, typically with a diameter of 0.05-to-1000 µm. Although the containers may be constituted by any surfactant membrane structure, the containers are preferably constituted by phospholipid bilayer membranes. Examples of such phospholipid membrane containers are biological cells, biological organelles or liposomes. Liposomes prepared from a variety of methods and from a variety of lipids, including, but not limited to phospholipids can be used. In addition, liposomes functionalized with membrane-bound and soluble proteins, such as ion-channels or the photosynthesis machinery, can be used for creating networks. Likewise biological cells and biological organelles could be used as starting materials. The formed containers and the nanotubes are thus typically constituted of lipid bilayers, but other surfactant molecules that self organize to form membrane structures might also be suitable as starting material, for example oil-in-water emulsions. Liposomes as well as biological cells are typically sustained in aqueous solution, and therefore the preparation methods for production of networks and containers are performed in aqueous solution. However, it should also be possible to use inverted structures that sustain organic solvents, for which the methods according to the invention would be performed in organic solvents, for example water-in-oil emulsions. Likewise, the methods according to the present invention should also be applicable to soap bubbles or similar structures in the gas phase.

The containers are preferably spherically shaped or near spherically-to-hemispherically shaped if immobilized onto a substrate, and are most preferably liposomes. The nanotubes are, as the name indicates, very small tubes or channels open to containers in both ends of the nanotube and thus forming communication between these two containers. The diameter of the nanotubes is typically 0.001-1000 µm, preferably 0.005-100 µm in outer diameter and the length of each such nanotube is preferably from 0.05 µm to 100 000 µm.

The containers are preferably placed onto a substrate that, due to physico-chemical interactions between the substrate and the containers, firmly immobilizes the containers. Said substrate is preferably, but not limited to bare borosilicate or silicon dioxide glass surfaces or surfaces covered with a thin film of a hydrophilic substance such as oxidized polystyrene, poly-L-lysine, poly-L-ornithine, lamillin, fibronectin or a similar substance, or covered with a thin film of a hydrophobic substance or a surface covered with a self-assembled monolayer (SAM). Networks can also be produced on metallic surfaces, for example gold-coated surfaces. It is also possible to use micropatterned surfaces and topographically complex surfaces. It might also be desirable that the containers can be translated at will by the application of external forces such as a pushing or a pulling force conveyed e.g. through a carbon fiber. It is therefore also possible to use specific interactions between the containers and the substrate such as ligand-receptor, and antibody-antigen, antibody-hapten, or DNA-DNA interactions in which either of the interacting pairs are immobilized on the substrate and its complementary binding partner is immobilized on the surface of the container.

Fig. 5 A is a schematic drawing showing how a complex structure of eleven containers connected by ten nanotubes is created through multiple fission, starting from a large mother liposome; Fig. 5 B is a fluorescence image of the intermediate structure in Fig. 5 A; Fig. 5 C is a photomicrograph taken under bright-field illumination of the final structure, since the nanotubes are not usually visible using bright-field microscopy lines have been drawn between the connected containers to show where they are positioned.

Fig. 6 is a schematic drawing of how a network can be created by multiple fission of several adjacent containers.

The networks produced by any of the embodiments described above are denoted as open networks because all pathways end with a container. Such networks can be transformed into closed or circular networks by, for example, fusing two or several pairs of network terminating containers together. Furthermore, several (i.e. from two to many hundreds or thousands) networks produced as describe above may be fused together in order to produce very large networks consisting of microscopic and nanoscopic components. Such container fusions are preferably done through microelectrofusion¹⁵. Fig. 7 is a schematic drawing of how closed structures of containers and interconnecting nanotubes can be formed by the method of electrofusion of network-terminating containers. Microelectrodes (6) connected to a low-voltage power supply (7) are placed on both sides of a pair of containers. When an electric field of suitable duration, field strength, and pulse profile is applied over the pair of said microelectrodes, the two network-terminating containers are fused into one container. With this approach, it is also possible to fuse a solitary container into a network container. Microelectrofusion of a daughter container (created from a surface immobilized mother container by using any of the embodiments described above) into a solitary surface immobilized container, is also an alternative approach for creating networks. With such an approach, it is possible to connect a large number of surface immobilized containers with nanotubes in a controlled fashion. In combination with the use of micropatterned surfaces for controlling the position of spontaneously surface immobilized containers, this method can be used for constructing very large networks consisting of hundreds to thousands of containers.

Additionally, it is possible to merge two or more containers connected by nanotubes within a network. Merging two adjoining containers may simply be performed by detaching the containers from the substrate, e.g. through the use of a micropipette or a microfiber. Due to the elastic energy conserved in the nanotubes, the containers will spontaneously translate towards each other and merge. This elastic behavior of the nanotubes can be utilized in micro/nano-robotic designs. For example, these networks may be used as microscale springs for connecting movable parts in a micro-robotic device. Additionally, this "quasi-fusion" allows for dynamic reaction initiation, probing, and complex artificial cell design.

It is also possible to form nanotube junctions, which is nanotubes interconnecting each other. This is shown in Fig. 8 , where three liposomes are interconnected by a common three-way junction. This example illustrates that the networks need not consist exclusively of containers with interconnecting nanotubes, but can also be made to include nanotube junctions. The three-way nanotube junction shown in Fig. 8 was made from a mother liposome composed of a mixture of phosphatidylcholine and soybean lecithin stained with the fluorescent membrane dye DiO. The mother liposome was divided into three daughter liposomes each about 7 µm in diameter using a carbon microfiber (1). The three resultant liposomes were aligned in a straight row. By careful manipulation using the carbon microfiber controlled by a micromanipulator, the lower liposome was placed next to the upper liposome. This placement caused the nanotubes connected to the middle liposome to approach each other. By gently pulling the middle liposome away from the other liposomes, the nanotube connections coalesced, thereby creating a three-way nanotube junction.

In addition to forming one or two-dimensional networks of nanotubes and containers, it is also possible to extend the networks to the third, axial, dimension by using substrates (8) with topographical features, as depicted in Fig. 9. Such substrates can be made from a variety of materials using a variety of micro-and nanofabrication techniques with minimum feature sizes in the low-nanometer regime. Another way to form 3D networks is to support the nanotube network in a 3D matrix, such as in a gel or in a porous material.

After formation of a network, it is possible to use one of the above mentioned construction techniques for excising parts of a container in a network. This feature can be used for post-construction adjustment of the container size, or for microanalysis of container contents. It is also possible to alter the membrane composition, surface properties and/or the content of individual containers after a network is formed (Fig. 10). This may, for example, be done by utilizing a photochemical technique, an electrochemical technique, a microelectroinjection technique and/or an electrofusion or electroporation technique. For example, it is possible to introduce substances or particles into or onto several containers. Fig. 10 A shows the principle for this where the contents and surface properties of individual containers are changed after the network was formed. Experimentally this was shown in part by using a mother liposome prepared with DiI (1,1'-dioctadecyl-3,3,3',3'-tetramethylindocarbocyanine perchlorate), a red fluorescent dye, in its membrane, and fluorescein, a green fluorescent dye, in its interiors. The mother liposome of this composition was subsequently divided into three daughter liposomes aligned in a row, each connected by a nanotube (Fig. 10 B). The lower of the three liposomes was photochemically bleached of its DiI-content, using a diffraction-limited spot of the 633-nm line of a HeNe laser for a period of one minute, resulting in a yellow fluorescent liposome (labeled YELLOW). The upper liposome was photochemically bleached of its fluorescein-content (50 µM), with a diffraction-limited spot of the 488-nm line of an Ar⁺-laser for a period of three minutes resulting in a red fluorescent liposome (labeled RED). The composition of the middle liposome is unaltered resulting in an overlaid fluorescent image that is orange (labeled ORANGE). As shown in Fig. 10 B, this created a system of three liposomes individually altered with respect to interior contents and membrane composition. The separated liposomes could then be fused resulting in the structure shown in Fig. 10 C, which is an overlaid fluorescent image that is orange (labeled ORANGE). The scale bar represents 10 µm.

Using such micromanipulation techniques entire networks or parts of networks, i.e. individual nanotubes or individual containers can be carefully manipulated and controlled and be given certain desired functionalities or materials properties. Simple systems such as planar lipid bilayer membranes, liposomes and lipid nanotubes have been used as templates for construction of metal^{7,8}, silica¹⁹, polymer²⁰, and protein-crystal solid-state structures⁹. Thus, network templates or partial network templates made from surfactant membranes can be converted, using appropriate technologies into solid state devices. For example, microelectronic devices made from a variety of metals can be produced through metallization of a network template. Also heterogeneous structures composed of both metal and silica parts can be made from liquid-crystalline surfactant membrane networks.

Furthermore, individual containers and nanotubes, as well as entire networks can be functionalized with membrane-bound and soluble proteins, and thus be tailored for a variety of sensor applications, and other pertinent applications including but not limited to implantable devices, biological and chemical computers. As examples, ion-channels, and photosynthesis machinery have been reconstituted in liposomes thereby serving as chemical drug-screening²¹, and light-responsive devices²².

Materials in or on the containers can be transported between the containers through nanotubes by electrophoresis and electroendoosmosis of charged particles when an electric potential difference is applied between the containers to which the nanotube is connected (Fig. 11). In the example shown in Fig. 11 C, 30-nm diameter fluorescent latex beads (8) were microinjected into unilamellar liposomes to demonstrate controlled delivery of materials inside the tube extensions. After beads had been injected into a mother liposome, two daughter vesicles were pulled to create a structure of three liposomes connected by two nanotubes. A Pt-equipped patch-clamp-type pipette was inserted into one of the liposomes, and a carbon fiber electrode was placed close to the surface of one of the connecting liposomes. A schematic of this system is presented in Fig. 11 A, and 11 B, and a photomicrograph taken in fluorescence is shown in Fig. 11 C. A voltage was applied between the two electrodes (6) using a low-voltage power supply (7) to achieve electrophoretic and electroosmotic delivery of materials as shown schematically in Fig. 11 B. Upon electric pulse-application, electrophoretic migration of the charged beads inside the confines of the nanotube could be registered, as shown in Fig. 11 D. In more complex networks, involving multiple tubes and containers, materials can be routed to different locations within the network simply by controlling the electric potential applied to individually addressed liposomes.

Materials in or on the containers can also be transported between the containers through nanotubes by creating a difference in membrane surface tension between the different containers in a network. Such a gradient in membrane tension will force the membrane material to migrate over the nanotube from the container with the lower surface tension to the one with the higher surface tension. This "moving wall" transport of membrane material causes a shear driven movement of the fluid contained inside the nanotube.

This type of materials transport is shown in Figs. 12 A-D which is a time series. In these figures, a large unilamellar liposome (left) is connected to a smaller unilamellar liposome (upper right corner) through a nanotube. A micropipette tip is inserted into the smaller liposome. The micropipette is filled with an aqueous solution of the same composition as that contained inside the unilamellar liposomes and is connected to a microinjection system. As aqueous solution is injected into the smaller liposome through the pipette, the membrane tension in that liposome increases and becomes greater than that of the larger unilamellar liposome to which it is connected through the nanotube. This difference in membrane surface tension between the two liposomes connected by the nanotubes, causes lipids to migrate from the liposome with the lower surface tension to the one with the higher surface tension, which in turn causes shear driven movement of the contained fluid. In Fig. 12 A small multilamellar liposome was pulled into the nanotube due to the difference in applied tension and was transported all the way to the interior of the connecting liposome (Fig. 12 A-D).

The microscopic networks according to the invention have several applications. They may, e.g., be used in, or as, microelectronic, microelectromechanical or microfluidic systems. They may also be used as templates for construction of a metal, silica, polymer and/or protein-crystal solid-state structure or as models for the study of cellular chemistry and physics in compartments, as well as for sensors, biological computers, chemical computers, micro/nano robotics and implantable devices or drug-screening devices. The invention is further illustrated in the examples below, which in no way are intended to limit the scope of protection.

### Example 1: Liposome nanotube-vesicle network formation by repetitive fission

As the starting material for production of complex microscopic networks of nanotubes and containers either multilamellar liposomes (5-25 lamellae) made by a rotaevaporative technique²⁶ or unilamellar liposomes formed by a dehydration/rehydration technique²⁷ were used. From both preparations, 1-to-20 µm diameter liposomes made from either phosphatidylcholine (PC) or soybean lecithin (SBL) were used.

Liposomes in a physiologic saline buffer (pH 7-8) were then transferred to borosilicate microscope cover slips coated with a thin film of polystyrene²⁸ made hydrophilic by UV/ozone plasma treatment. The coverslips were mounted on the stage of an inverted fluorescence microscope. Nanotubes were formed by mechanical fission of surface-immobilized liposomes (5-to-20 µm in diameter) using flexible 5-µm outer-diameter, 30-µm-long carbon fibers controlled by high-graduation micromanipulators. This is illustrated schematically in Fig. 1. The carbon fiber (5 µm in diameter) was placed on the equator of a liposome (diameter ∼5 to 30 µm) for homofission, resulting in two equally sized daughter liposomes, as shown in Fig. 1 B, or at some desired latitude for heterofission, resulting in two differently sized daughter liposomes, and translated in the z-direction (axially) until it touched the surface of the cover slip, as shown in Fig. 1 B, leaving a small tube connection between the separated daughter liposomes. To further separate the two daughter liposomes, the micromanipulator-controlled carbon fiber was used to push on one of the daughter liposomes at variable speeds, as shown in Fig. 1 C. This way it was possible to make tubes of controlled length from a few micrometers up to several hundreds of micrometers long. The tube-attachments on the liposome surfaces were freely movable, and always attached between daughter liposomes describing the shortest distance, and only rarely adhered to the substratum, as shown in Fig. 1 D. In addition to vesicle diameter, tube diameter, and tube length, also the angle θ between two or several tube extensions can be set, as illustrated in Fig. 1 E. The success rate of forming nanotubes from liposome fission was close to 100%, and this formation takes no more than a few seconds to complete.

The electrodes were coated with bovine serum albumin (BSA) from a 1-mg/ml solution to minimize the interaction between lipids and the electrode surface. The nanotubes occasionally stuck to the electrode surfaces. These problems were overcome by mechanical rupture of the nanotubes attached to the electrodes, simply by moving the electrode at a high velocity from the liposomes. The nanotubes detached from the electrode and the membrane material was re-integrated into the liposome. Alternatively, an electric potential applied to the carbon microfiber can be used for removing nanotubes stuck to the electrode surface.

Using the liposomes, and the connecting nanotubes as basic building blocks, it was possible to build complex 1D, 2D, and 3D structures. This was performed by translation of pulled-off vesicles to a target area on the surface or in the matrix by pushing with the micromanipulator-controlled carbon fiber tip as described above. A daughter liposome adhered quite readily and rapidly to the surface as soon as the translation was discontinued. The accuracy in positioning a liposome to a target zone is approximately 5 µm under the experimental conditions used. Using micropatterned surfaces²⁹ rather than a homogenous surface is likely to improve both the positional precision of liposomes in the networks as well as providing a means of controlling vesicle geometry³⁰, vesicle contact area, contact angle, and tube-adhesion to a substratum.

Fig. 5 A schematically describes how a network was constructed from eleven multilamellar liposomes and ten connecting nanotubes by repetitive or multiple fission, starting from a large mother liposome. Fig. 5 B shows a fluorescence micrograph of the first intermediate in this construction pathway. The interliposomal nanotubes were made visible by staining with DiO (3,3'-dioctadecyloxacarbocyanine perchlorate), a highly fluorescent membrane dye that was excited using the 488-nm line from an Ar⁺ laser. Lipid bilayer nanotubes formed by the application of axial loads on cells and liposomes, and bulk-produced glycolipid nanotubes made from galactosylceramide have been estimated to be as small as 20 and 27 nm in diameter, respectively⁹. Conservative estimates of dₜ, obtained simply by counting the number of pixels (in 8-32 accumulated images) that were occupied by fluorescence³¹ from stained multi-lamellar nanotubes fell in the range of 200-500 nm. Thermal and convective motions as well as optical diffraction effects bias this result, and the actual diameter of the tubes is likely smaller²⁰. Fig. 5 C shows a photomicrograph taken with bright-field optics of the final structure. The nanotubes in this example were not visible using bright field microscopy. Lines have therefore been drawn in the figure between the connected liposomes to show where they are positioned.

In another scheme, discrete units of liposomes and tubes were repeatedly made and placed to form specific patterns. Starting liposomes of different compositions and contents can be utilized and combined in patterns with controlled connectivity. This is schematically illustrated in Fig. 6, and represents a way of building, for example, artificial neuronal net-like structures. These networks are called open because all networks dead-end with an unconnected liposome.

It was also possible to make closed or circular networks in which two or several pairs of network terminating liposomes were fused together using a microelectrofusion technique¹⁵, creating closed circuits of nanotubes and vesicles, as shown in Fig. 7. By this technique gigantic networks with a large number of nanotubes and liposomes can be constructed.

The nanotube networks could be made even more complex by using nanotube junctions, which is nanotubes interconnecting each other. This is shown in figure 8, where three liposomes are interconnected by a common three-way junction. This example illustrates that the networks need not consist exclusively of liposomes with interconnecting nanotubes, but can also be made to include nanotube junctions.

In addition to forming one or two-dimensional networks of nanotubes and containers, it is also possible to extent the network to the third dimension by using substrates with topographical features, as depicted in Fig. 9. Another way to form 3D networks is to support the nanotube network in a 3D matrix, such as in a gel or in a porous material.

Molecular diffusion in the tube is negligible because of the small inner diameter and the relatively long distance between the liposomes. Therefore, the daughter liposomes in the network can virtually be considered as separate bodies. Consequently, chemical composition of both membrane and interior contents of the separated liposomes can be modulated independently after the network has been constructed, as shown in Fig. 10. This differentiation of liposomal contents and membrane composition can be performed by a variety of high-resolution chemical and physical manipulation technologies. Of particular relevance for artificial cell design is that colloidal particles and organelles or organelle-mimetics can be electroinjected²⁷ into individual liposomes as schematically shown in Fig. 10 A. Following differentiation, liposomes can be microelectrofused to initiate reactions in the product liposome(s). It was observed that the lipid nanotube functions as an elongated fusion pore effectively lowering the activation energy for fusion, and lower voltages were needed than for fusion of solitary liposomes (data not shown). The daughter liposomes could also be selectively manipulated by photochemical bleaching. To illustrate this, liposomes were prepared with DiI (1,1'-dioctadecyl-3,3,3',3'-tetramethylindo-carbocyanine perchlorate), a red fluorescent dye, in their membranes, and fluorescein, a green fluorescent dye, in their interiors. A mother liposome of this composition was subsequently divided into three daughter liposomes aligned in a row, each connected by a nanotube. The lower of the three liposomes was photochemically bleached of its DiI-content, using a diffraction-limited spot of the 633-nm line of a HeNe laser for a period of one minute. The upper liposome was photochemically bleached of its fluorescein-content (50 µM), with a diffraction-limited spot of the 488-nm line of an Ar⁺-laser for a period of three minutes. As shown in Fig. 10 B, this created a system of three liposomes individually altered with respect to interior contents and membrane composition. The separated liposomes could then be fused resulting in the structure shown in Fig. 10 C.

30-nm diameter fluorescent latex beads were microinjected into unilamellar liposomes to demonstrate controlled delivery of materials inside the tube extensions. Unilamellar tubes adhered more readily to the surface and were generally of a larger diameter than multi-lamellar tubes. After beads had been injected into a mother liposome, two daughter vesicles were pulled creating a structure of three liposomes connected by two nanotubes. A Pt-equipped patch-clamp-type pipette was inserted into one of the liposomes after the membrane had been destabilized through electroporation^{27,32}, and a carbon fiber electrode was placed close to the surface of one of the connecting liposomes. A schematic of this system is presented in Fig. 11 A and 11 B, and a photomicrograph taken in fluorescence is shown in Fig. 11C and 11 D. A voltage was applied between the two electrodes to create electrophoretic and electroosmotic delivery of materials as shown schematically in Fig. 11 A and 11 B. Upon pulse-application (∼50 V dc, 3000 µs, ∼50 V/cm), electrophoretic migration of the charged beads inside the confines of the nanotube could be registered, as shown in Fig. 11 C and 11 D. In more complex networks, involving multiple tubes and containers, materials can be routed to different locations within the network simply by controlling the electric potential applied to individually addressed liposomes. Similar control of electrophoretic and electroosmotic flows in addressed channels have been demonstrated in microfluidic devices constructed using silicon technology³³.

### Example 2: Formation of liposome nanotube-vesicle networks through mechanical partitioning of vesicular structures by a micropipette aspiration technique

The starting material for the formation of a liposome network was unitary cell-sized unilamellar or multilamellar liposomes, typically with a diameter of 20-to-60 µm, immobilized on a hydrophilic surface. The preparation of such liposomes was discussed in Example 1 above. Also unilamellar liposomes connected to multilamellar protrusions were used. These liposomes have the advantage that lipid material can be fed into the unilamellar liposome from the multilamellar part. A pulled glass micropipette, with an inner diameter of 3-to-10 µm, was back-filled with phosphate-buffered saline and mounted onto an in-house built gravity flow microinjection/aspiration device, set with a compensation pressure high enough to counterbalance the capillary forces of the micropipette.

Figure 2 is a schematic that depicts the procedure for creating nanotube-vesicle network: The tip of the micropipette is first positioned in close contact with a vesicle (Fig. 2 A), application of a negative pressure to the micropipette leads to aspiration of the liposome membrane (Fig. 2 B). When a part of the liposome membrane enters the micropipette, the application of negative pressure is terminated. Upon withdrawal of the micropipette, the aspirated membrane part contained in the micropipette disconnects from the mother container, resulting in the formation of a daughter liposome contained inside the micropipette, and a lipid nanotube (4) connecting the mother liposome and the newly formed daughter liposome (Fig. 2 C). Consequently, the size of the daughter containers is determined by the amount of membrane material that is aspirated into the micropipette. The size of the daughter containers created, are typically in the range of 3-to10 µm. Translation of the micropipette and the contained daughter liposome could be performed over long distances, typically several hundred µm from the mother-liposome, without sign of tubular disconnection between the vesicles. The daughter liposome formed in this way is then attached to the surface at a target location by axial translation of the micromanipulator-controlled micropipette towards the surface. By applying a positive pressure onto the injection/aspiration system, the aspirated part of the mother liposome is carefully released and is allowed to adhere to the substrate (Fig. 2 D). After the daughter liposome has settled firmly on the substrate surface, the micropipette tip is removed from the daughter liposome by pulling (Fig. 2 E). As with the first method for producing networks of nanotubes and containers using liposome fission, as described above, this method can control the length of the tubes, 1, the angle ,θ, between two nanotube extensions, and the daughter liposomes diameter, dᵥ. Thus, the different parameters shown in Fig. 1 E can also be freely varied with this micropipette aspiration based partitioning technique. In addition, three-dimensional networks are very simple to create with this technique since the daughter liposome contained inside the micropipette can easily be translated in any direction.

To form large networks of liposomes and interconnecting nanotubes, aspiration of the mother liposome membrane and the subsequent formation of daughter-vesicles were repeatedly performed on a single mother-vesicle, thus generating a network consisting of several daughter vesicles connected to a common mother vesicle. Alternatively, large networks are formed by aspiration, or backfilling, of an entire vesicle into a micropipette (Fig. 3 A-B) and by stepwise ejection of the aspirated vesicle by gradual application of a positive pressure, a bulbous structure is formed at the outlet of the micropipette (Fig. 3 C). At a target location, the bulbous structure is brought in contact with the substrate by negative axial translation of the micropipette (Fig. 3 D). The bulbous structure is allowed to adhere to the substrate, forming a surface-immobilized daughter container connected by a lipid nanotube to the aspirated mother vesicle. The micropipette is then moved to a new target location by axial and lateral translation away from the newly formed daughter container (Fig. 3 E). This stepwise ejection of the mother container and subsequent surface immobilization procedure is repeated resulting in new daughter containers until a desired number of containers is obtained (Fig. 3 F-G). With this approach, large linear liposome networks can be "printed" on two- as well as three-dimensional surfaces.

### Example 3: Micropipette-assisted formation of nanotube-vesicle networks

The starting material for the formation of a liposome network was unitary cell-sized unilamellar liposomes, typically with a diameter of 20-to-40 µm, immobilized on a hydrophilic surface. The preparation of such liposomes was discussed in Example 1 above. Also unilamellar liposomes connected to multilamellar protrusions were used. These liposomes have the advantage that lipid material can be fed into the unilamellar liposome. A pulled glass micropipette, with an outer diameter of 1-to-2.5 µm, was back-filled with phosphate-buffered saline and mounted onto an electroinjection system, which use a microinjector (Eppendorf Femtojet or similar piece of equipment from other manufacturers) that was set in continuous flow mode with an injection pressure high enough to counterbalance the capillary forces of the micropipette.

Figure 4 is a schematic that depicts the procedure for creating nanotube network: The tip of a micropipette was first positioned in close contact with the vesicle (Fig. 4 A), followed by application of one or several transient rectangular dc-voltage pulses of a field strength of 10-to-40 V/cm and durations of 1-to-10 000 µs, which lead to the penetration of the liposome membrane (Fig. 4 B). After the micropipette entered the liposome, the lipid membrane was allowed to reseal around the pipette-tip. Upon withdrawal of the micropipette, the adhered membrane did not disconnect, instead a lipid nanotube was formed between the mother liposome and the pipette-tip (Fig. 4 C). By increasing the injection pressure, buffer solution flowed into the nanotube and forced it to expand, thus forming a small vesicle at the outlet of the micropipette-tip (Fig. 4 D). Since buffer solution was forced into the small daughter-vesicle continuously, the size of the vesicle increased gradually (Fig. 4 E).

Once the daughter-vesicle reached the desired diameter, typically 5-to-10 µm, the micropipette with its tip-attached daughter-vesicle was translated to a desired location. Translation could be performed over long distances, typically several hundred µm from the mother-liposome, without sign of tubular disconnection between the vesicles. A number of methods can be used to remove the micropipette from the vesicle. The procedure we usually follow is to press the micropipette and the attached vesicle to the substratum with a carbon fiber, thus allowing the vesicle to adhere to the surface (Fig. 4 E and 4 F). It was then possible to remove the micropipette from the daughter vesicle without any visible sign of leakage or vesicle deformation.

To form large networks of liposomes and interconnecting nanotubes, electroinjection of the micropipette and the subsequent inflation of daughter-vesicles were repeatedly performed on a single mother-vesicle, thus generating a network consisting of several daughter vesicles connected to a common mother liposome. Such a network is said to be an open structure since all pathways dead-end with an unconnected liposome. Networks of this type are, however, readily transformed into closed or circular networks through the use of micro-electrofusion¹⁵ as discussed above. By fusing two or several pairs of dead-ending liposomes together, closed circuits of nanotubes and vesicles can be created. By this technique highly complex networks with almost infinite numbers of nanotubes and vesicles can be constructed.

Since the sole source of membrane material available for growth of the daughter vesicle during inflation is the membrane of the mother vesicle, it is evident that excess membrane material from the mother must flow via the lipid nanotube to the daughter vesicle. This process is regulated through a membrane-tension-gradient established between the liposomes. Due to the donation of membrane material to the daughter vesicle, the membrane tension of the mother vesicle is continuously increased, diminishing the membrane tension gradient. Consequently, the flux of membrane drops and finally an equilibrium in membrane tension is reached and the membrane transport is terminated. There is thus a limit to the amount of membrane material that a mother vesicle can provide. This limited supply of membrane material may appear to be a limitation to the technique. Several solutions to this problem are, however, available. For example, electrofusion techniques can be used for fusing solitary liposomes into a network in order to add more membrane material. It is also possible to utilize electroporation techniques for decreasing the membrane tension. By opening up holes in the vesicle membrane, excess intravesicular solution is released leading to a decrease in membrane tension. Another solution is to use unilamellar vesicles with multilamellar protrusions as starting material. The multilamellarity of the vesicles acts as a membrane reservoir, feeding membrane to the unilamellar vesicle in order to counteract an increase in membrane tension and can with a carbon fiber be cut off from the final network.
As the increase in membrane area of the daughter vesicle during the inflation phase obviously is balanced by a flux of membrane material over the nanotube, there must be a relationship between the rate of area increment and the diameter of the nanotube. Assuming identical lipid density in the two vesicles, the rate of area increase (A) of the daughter-vesicle is related to the radius of the interconnecting nanotube (dₜ) by A = πdₜvₓ where vₓ is the linear lipid flux velocity. By simultaneously measuring the rate of area increment of the daughter vesicle and the linear velocity of the lipid flux (estimated through the velocities of small particles flowing inside or on the nanotube) it is thus possible to estimate the nanotube diameter. Values for (vₓ) and A is typically 30 µm/s and 30 µm²/s respectively.

### References

1. Sackmann, E. Membrane bending energy concept of vesicle-shape and cell shape-transitions FEBS Letters 346, 3 (1994).
2. Mathivet, L., Cribier, S. & Devaux, P.F. Shape change and physical properties of giant phospholipid vesicles prepared in the presence of an AC electric field. Biophys. J. 70, 1112 (1996).
3. Seifert, U. Configurations of fluid membranes and vesicles. Adv. Phys. 46, 13 (1997).
4. Heinrich, V., Bozic, B., Svetina, S. & Zeks, B. Vesicle deformation by an axial load: From elongated shapes to tethered vesicles. Biophys. J. 76, 2056 (1999).
5. Service, R.F. Self-assembly comes together. Science 265, 316 (1994).
6. Takei K. et al., Generation of coated intermediates of clathrin-mediated endocytosis on protein-free liposomes. Cell 94, 131 (1998).
7. Schnur, J.M. & Shashidhar, R. Self-assembling phospholipid tubules. Adv. Mater. 6, 971 (1994).
8. Schnur, J.M. Lipid tubules - a paradigm for molecularly engineered structures. Science 262, 1669 (1993).
9. Wilson-Kubalek, E.M., Brown, R.E., Celia, H. & Milligan, R.A. Lipid nanotubes as substrates for helical crystallization of macromolecules. Proc. Natl. Acad. Sci. U.S.A 95, 8040 (1998).
10. Waugh, R.E. Surface viscosity measurements from large bilayer vesicle tether formation. Biophys. J. 38, 29 (1982).
11. Evans, E. & Yeung, A. Hidden dynamics in rapid changes of bilayer shape. Chem. Phys. Lipids 73, 39 (1994).
12. Oberholzer, T., Nierhaus, K.H. & Luisi, P.L. Protein expression in liposomes Biochem. Biophys. Res. Commun 261, 238 (1999).
13. Chakrabarti, A.C., Breaker, R.R., Joyce, G.F. & Deamer, D.W. Production of RNA by a polymerase protein encapsulated within phospholipid vesicles. J. Mol. Evol. 39, 555 (1994).
14. Bucher, P., Fischer, A., Luisi, P.L., Oberholzer, T. & Walde, P. Giant vesicles as biochemical compartments: The use of microinjection techniques Langmuir 14,2712 (1998).
15. Chiu, D.T. et al., Chemical transformations in individual ultrasmall biomimetic containers. Science 283, 1892 (1999).
16. Chiu, D.T. et al., Manipulating the biochemical nanoenvironment around single molecules contained within vesicles. Chem. Phys. 247, 133 (1999).
17. Stange, P.; Zanette D.; Mikhailov A.; Hess B. Self-organizing molecular networks. Biophys. Chem. 79, 233 (1999).
18. Karlsson, R. et al. Single particle transport in nanoscale lipid channels. Submitted to Nature*.*
19. Baral, S. & Schoen, P. Silica-deposited phospholipid tubules as a precursor to hollow submicron-diameter silica tubules. Chem. Mater. 5, 145 (1993).
20. Evans, E., Bowman, H., Leung, A., Needham, D. & Tirell, D. Biomembrane templates for nanoscale conduits and networks. Science 273, 933 (1996).
21. Tank, D. W. et al. Patch-recorded single-channel current of the purified and reconstituted Torpedo acetylcholine receptor, PNAS. 80, 5129, (1983).
22. Steinberg-Yfrach, G. et al. Light-driven production of ATP catalysed by F0F1-ATP synthase in an artificial photosynthetic membrane, Nature 392 479, (1998).
23. Laplante, J.P. et al. Experiments on pattern recognition by chemical kinetics, J. Phys. Chem., 99 10063 (1995).
24. Hjelmfelt, A. et al. Pattern recognition in coupled chemical kinetic systems, Science, 260 335 (1993).
25.Xie, X.S. & Trautman, J.K. Optical studies of single molecules at room temperature. Annu. Rev. Phys. Chem. 49, 441 (1998).
26. Moscho, A. et al., Rapid preparation of giant unilamellar vesicles. Proc. Natl. Acad. Sci. USA 93, 11443 (1996). Karlsson, M. et al., Electroinjection of colloid particles and biopolymers into single cells and unilamellar liposomes. Analytical Chemistry. 72, 5857 (2000).
27. Green, R.J., et al., Surface plasmon resonance for real time in situ analysis of protein adsorption to polymer surfaces. Biomaterials 18, 405 (1997).
28. Zhang, S. et al., Biological surface engineering: a simple system for cell pattern formation. Biomaterials 20, 1213 (1999).
29. Chen, C.S., Mrksich, M., Huang, S., Whitesides, G.M. & Ingber, D.E. Geometric control of cell life and death Science 276, 1425 (1997).
30. Lyon, W.A. & Nie, S. Confinement and detection of single molecules in submicrometer channels. Anal. Chem. 69, 3400 (1997).
31. Lundqvist, J.A. et al. Altering the biochemical state of individual cultured cells and organelles with ultramicroelectrodes. Proc. Natl. Acad. Sci. USA 95, 10356 (1998).
32. Harrison, D.J., Fluri, K., Seiler, K., Fan, Z., Efferhauser, C. & Manz, A. Micromachining a miniaturized capillary electrophoresis-based chemical analysis system on a chip. Science 261, 895 (1993).

## Claims

1. A method for the production of a one-, two- or three-dimensional microscopic network of containers and nanotubes, both said containers and said nanotubes being constituted of at least one surfactant membrane, said method comprising partitioning of one mother container (2) laced on or in a substrate into two daughter containers (3) in communication with each other through a nanotube (4), followed by partitioning of one of or both the resulting daughter containers (3) resulting in new daughter containers in communication with each other, wherein the partitioning of daughter containers is repeated until a desired number of containers is obtained.

2. A method according to claim 1 for the production of a one-dimensional microscopic network, wherein said containers (3) are placed onto a planar substrate.

3. A method according to claim 1 for the production of a two-dimensional microscopic network, wherein said containers (3) are placed onto a planar substrate.

4. A method according to claim 1 for the production of a three-dimensional microscopic network, wherein said containers (3) are placed onto a three-dimensionally topographic substrate.

5. A method according to claim 1 for the production of a three-dimensional microscopic network, wherein said containers (3) are placed in a highly viscous substrate.

6. A method according to claim 5, wherein said highly viscous substrate is a gel.

7. A method according to any one of the claims 1-6, wherein said surfactant membrane has liquid-crystalline properties.

8. A method according to any one of the claims 1-7, wherein said surfactant membrane is a lipid membrane

9. A method according to claim 8, wherein said lipid membrane is a lipid bilayer membrane.

10. A method according to claim 9, wherein said lipid bilayer membrane is a phospholipid bilayer membrane.

11. A method according to claims 8-10, wherein said lipid membrane contains proteins.

12. A method according to any one of the claims 1-11, wherein said mother container (2) is a liposome.

13. A method according to any one of the claims 1-11, wherein said mother container (2) is a biological cell.

14. A method according to any one of the claims 1-11, wherein said mother container (2) is a biological organelle.

15. A method according to any one of the claims 1-8, wherein said mother container (2) is an emulsion droplet, such as an oil-in-water emulsion droplet.

16. A method according to any one of the claims 1-15, wherein the diameter of said nanotube (4) is controlled through regulation of the membrane tension of the network.

17. A method according to any one of the claims 1-15, wherein the diameter of said nanotube (4) is controlled through variation of the bending modulus of the membrane by controlling the composition of the membrane.

18. A method according to any one of the claims 1-17, wherein said partitioning is accomplished through mechanical fission essentially through the whole mother container (2), and wherein said nanotube (4) is formed by the non-cleaved material of the mother container (2).

19. A method according to claim 18, wherein said mechanical fission is accomplished through use of a flexible microfiber (1), such as a carbon fiber.

20. A method according to claim 19, wherein after mechanical fission the formed nanotube (4) is lengthened through movement of said carbon fiber (1).

21. A method according to any one of the claims 18-20, wherein the sizes of the containers (3) formed through the mechanical fission are controlled by the positioning of said carbon fiber (1) prior to said mechanical fission.

22. A method according to any one of the claims 1-17, wherein said partitioning of said mother container (2) into daughter containers (3) is accomplished through the use of a micropipette aspiration technique wherein at least one liquid-filled micropipette (5) is used to pull the mother container (2) into the daughter containers (3) which are in communication with each other through a nanotube (4), wherein the tip of said micropipette (5) is positioned in close contact to the surface of said mother container (2) and a part of the said mother container (2) is aspirated into said micropipette (5), which is then moved in a direction away from the mother container (2), part of said mother container (2) being retained in its original position due to adherence to said substrate thus forming one daughter container (3) while the other part of said mother container (2) forms the second daughter container (3) and the connecting nanotube (4), whereupon said second daughter container (3) is released from said micropipette (5).

23. A method according to any one of the claims 1-17, wherein said partitioning of said mother container (2) into daughter containers (3) is accomplished through the use of a micropipette aspiration technique wherein the entire mother container (2) is aspirated into the at least one liquid-filled micropipette (5) and the partitioning of the mother container (2) is performed by ejecting a part of the mother container (2) from the micropipette (5), thus forming a bulbous structure at the tip of said micropipette (5), whereupon said bulbous structure is allowed to adhere to said substrate through axial translation of said micropipette (5) which then is moved in a direction away from said bulbous structure resulting in the bulbous structure forming one daughter container (3) and the nanotube (4) whereupon the part of the mother container (2) remaining in the micropipette (5) is released thus forming the second daughter container (3).

24. A method according to claim 23, wherein the mother container (2) is aspirated into the micropipette (5) through the back end of the micropipette (5).

25. A method according to any one of the claims 1-17, wherein said partitioning is accomplished through the use of an electroinjection technique wherein at least one liquid-filled micropipette (5) is used to pull the mother container (2) into the two daughter containers (3) in communication with each other through said nanotube (4), wherein the tip of said at least one micropipette (5) is inserted into said mother container (2) and then is moved sidewise while liquid is injected through said micropipette (5), said liquid flowing into said nanotube (4) forcing it to expand, thus forming a container (3) at the outlet of the micropipette tip, part of said mother container (2) being retained in its original position due to adherence to said substrate while the other part of said mother container (2) forms a daughter container (3) and a nanotube (4) connecting said mother container (2) and said daughter container (3), whereupon said micropipette (5) is withdrawn from the newly formed daughter container (3).

26. A method according to claim 25, wherein at least one transient dc-voltage pulse is applied through said at least one micropipette (5) for penetration of the membrane of said mother container (2).

27. A method according to claim 26, wherein said transient dc-voltage pulse has a field strength of 0.1 to 4000 V/cm and a duration of 1 to 10 000 µs.

28. A method according to any one of the claims 1-27, wherein said network is heterogeneous.

29. A method according to any one of the claims 1-28, wherein said partitioning is performed along the equator of the mother container (2) resulting in homofission.

30. A method according to any one of the claims 1-28 wherein said mechanical fission is performed along a latitude other than the equator of the mother container (2) resulting in heterofission.

31. A method for the production of a microscopic network of containers and nanotubes, both said containers and said nanotubes being constituted of at least one surfactant membrane, wherein two or more networks produced according to any one of the claims 1-30 are fused together.

32. A method for the production of a microscopic network of containers and nanotubes, both said containers and said nanotubes being constituted of at least one surfactant membrane, wherein one or more solitary mother containers (2) are fused into a network produced according to any one of the claims 1 - 31.

33. A method according to any one of the claims 1 - 32, further comprising fusion of two or more containers (3) connected by nanotubes (4) within the formed network

34. A method according to claim 31-33, wherein said fusion is performed by microelectrofusion.

35. A method according to any one of the claims 1 - 34, further comprising alteration of the membrane composition and/or content of individual containers within the network.

36. A method according to claim 35, wherein said alteration is performed by a photochemical technique.

37. A method according to claim 35 wherein said alteration is performed by an electrochemical technique.

38. A method according to claim 35, wherein said alteration is performed by a microinjection technique.

39. A method according to claim 35, wherein said alteration is performed by an electrofusion technique.

40. A method according to any one of the claims 1 - 39, wherein particles (8) contained in one container (3) are transported to another container (3) by influence of an electric field on the nanotube connecting the two containers (4).

41. A method according to any one of the claims 1-39, wherein particles (8) contained in one container (3) are transported to another container (3) by adjustment of the bilayer surface tension.

42. A microscopic network of at least two containers (3) constituted of at least one surfactant membrane and at least one nanotube (4) constituted of at least one surfactant membrane, said nanotube (4) forming communication between said containers (3).

43. A microscopic network of containers and nanotubes according to claim 42 obtainable by a method according to any one of the claims 1 - 41.

44. A microscopic network according to claim 42, wherein said surfactant membrane has liquid-crystalline properties.

45. A microscopic network according to any one of the claims 42 to 44, wherein said surfactant membrane is a lipid membrane.

46. A microscopic network according to claim 45, wherein said lipid membrane is a lipid bilayer membrane.

47. A microscopic network according to claim 45, wherein said lipid membrane is a phospholipid bilayer membrane.

48. A microscopic network according to claims 45-47, wherein said lipid membrane contains proteins.

49. A microscopic network according to any one of the claims 43 - 48, wherein said mother containers (2) a liposome.

50. A microscopic network according to any one of the claims 43 - 48, wherein said mother container (2) is a biological cell.

51. A microscopic network according to any one of the claims 43 - 48, wherein said mother container (2) is a biological organelle.

52. A microscopic network according to any one of the claims 43 - 48, wherein said mother container (2) is an emulsion droplet.

53. A microscopic network according to any one of the claims 43 - 48, wherein individual containers (3) are differentiated with respect to membrane composition and/or contents.

54. A microscopic network according to any one of the claims 42- 53, wherein said network is heterogeneous.

55. A network formed by fusion of at least two microscopic networks according to any one of the claims 42 - 54.

56. The use of a network according to any one of the claims 42-55 or a network produced according to any one of the claims 1 - 41 in a microelectronic system.

57. The use of a network according to any one of the claims 42 - 55 or a network produced according to any one of the claims 1 - 41 in a microelectromechanical system.

58. The use of a network according to any one of the claims 42-55 or a network produced according to any one of the claims 1 - 41 in a microfluidic system.

59. The use of a network according to any one of the claims 42 - 55 or a network produced according to any one of the claims 1 - 41 as a template for construction for a metal, silica, polymer and/or protein-crystal solid-state structure.

60. The use of a network according to any one of the claims 42-55 or a network produced according to any one of the claims 1 - 41 as a model for the study of membrane biophysics and cellular chemistry in compartments.

61. The use of a network according to any one of the claims 42 - 55 or a network produced according to any one of the claims 1 - 41 in a biological computer.

62. The use of a network according to any one of the claims 42 - 55 or a network produced according to any one of the claims 1 - 41 in a chemical computer.

63. The use of a network according to any one of the claims 42-55 or a network produced according to any one of the claims 1 - 41 in a microanalytical system.

64. The use of a network according to any one of the claims 42 - 55 or a network produced according to any one of the claims 1 - 41 in the creation of an artificial cell.

65. The use of a network according to any one of the claims 42 - 55 or a network produced according to any one of the claims 1 - 41 in the creation of a cellular network.

66. The use of a network according to any one of the claims 42 - 55 or a network produced according to any one of the claims 1 - 41 in a chemical or physical sensor.

67. The use according to claim 66, wherein said sensor is a sensor for drug screening.

68. The use of a network according to any one of the claims 42 - 55 or a network produced according to any one of the claims 1- 41 in robotics.

69. The use according to claim 68, wherein said robotics is microrobotics or nanorobotics.

70. The use of a network according to any one of the claims 42 - 55 or a network produced according to any one of the claims 1 - 41 as a single-molecule device.

71. The use of a network according to any one of the claims 42 - 55 or a network produced according to any one of the claims 1- 41 in an implantable device.

## Patentansprüche

1. Verfahren zur Herstellung eines ein-, zwei- oder dreidimensionalen mikroskopischen Netzwerkes von Behältern und Nanotubes, wobei sowohl die Behälter als auch die Nanotubes aus mindestens einer Tensidmembran gebildet werden, wobei das Verfahren das Unterteilen eines Mutterbehälters (2), der auf oder in ein Substrat platziert worden ist, in zwei Tochterbehälter (3), die durch ein Nanotube (4) miteinander in Kommunikation stehen, und das nachfolgende Unterteilen eines der oder der beiden resultierenden Tochterbehälter (3), was zu neuen, in Kommunikation miteinander stehenden Tochterbehältern führt, wobei das Unterteilen der Tochterbehälter wiederholt wird, bis eine gewünschte Anzahl an Behältern erhalten wird, umfasst.

2. Verfahren gemäß Anspruch 1 zur Herstellung eines eindimensionalen mikroskopischen Netzwerkes, wobei die Behälter (3) auf ein planares Substrat platziert werden.

3. Verfahren gemäß Anspruch 1 zur Herstellung eines zweidimensionalen mikroskopischen Netzwerkes, wobei die Behälter (3) auf ein planares Substrat platziert werden.

4. Verfahren gemäß Anspruch 1 zur Herstellung eines dreidimensionalen mikroskopischen Netzwerkes, wobei die Behälter (3) auf ein dreidimensionales topographisches Substrat platziert werden.

5. Verfahren gemäß Anspruch 1 zur Herstellung eines dreidimensionalen mikroskopischen Netzwerkes, wobei die Behälter (3) in ein hochgradig viskoses Substrat platziert werden.

6. Verfahren gemäß Anspruch 5, wobei das hochgradig viskose Substrat ein Gel ist.

7. Verfahren gemäß einem der Ansprüche 1-6, wobei die Tensidmembran flüssigkristalline Eigenschaften besitzt.

8. Verfahren gemäß einem der Ansprüche 1-7, wobei die Tensidmembran eine Lipidmembran ist.

9. Verfahren gemäß Anspruch 8, wobei die Lipidmembran eine Lipiddoppelschichtmembran ist.

10. Verfahren gemäß Anspruch 9, wobei die Lipiddoppelschichtmembran eine Phospholipiddoppelschichtmembran ist.

11. Verfahren gemäß den Ansprüchen 8-10, wobei die Lipidmembran Proteine enthält.

12. Verfahren gemäß einem der Ansprüche 1-11, wobei der Mutterbehälter (2) ein Liposom ist.

13. Verfahren gemäß einem der Ansprüche 1-11, wobei der Mutterbehälter (2) eine biologische Zelle ist.

14. Verfahren gemäß einem der Ansprüche 1-11, wobei der Mutterbehälter (2) eine biologische Organelle ist.

15. Verfahren gemäß einem der Ansprüche 1-8, wobei der Mutterbehälter (2) ein Emulsionströpfchen, zum Beispiel ein Tröpfchen einer Öl-in-Wasser-Emulsion ist.

16. Verfahren gemäß einem der Ansprüche 1-15, wobei der Durchmesser des Nanotubes (4) durch Regulieren der Membranspannung des Netzwerkes kontrolliert wird.

17. Verfahren gemäß einem der Ansprüche 1-15, wobei der Durchmesser des Nanotubes (4) durch Variieren des Biegemoduls der Membran durch Kontrollieren der Zusammensetzung der Membran kontrolliert wird.

18. Verfahren gemäß einem der Ansprüche 1-17, wobei das Unterteilen durch mechanische Spaltung im Wesentlichen durch den gesamten Mutterbehälter (2) bewerkstelligt wird und wobei das Nanotube (4) durch das nicht gespaltene Material des Mutterbehälters (2) gebildet wird.

19. Verfahren gemäß Anspruch 18, wobei die mechanische Spaltung durch Verwendung einer flexiblen Mikrofaser (1), zum Beispiel einer Kohlenstofffaser, bewerkstelligt wird.

20. Verfahren gemäß Anspruch 19, wobei nach dem mechanischen Spalten das gebildete Nanotube (4) durch Bewegung der Kohlenstofffaser (1) verlängert wird.

21. Verfahren gemäß einem der Ansprüche 18-20, wobei die Grö-ßen der durch das mechanische Spalten gebildeten Behälter (3) durch das Positionieren der Kohlenstofffaser (1) vor dem mechanischen Spalten kontrolliert werden.

22. Verfahren gemäß einem der Ansprüche 1-17, wobei das Unterteilen des Mutterbehälters (2) in Tochterbehälter (3) durch die Verwendung einer Mikropipetten-Ansaugtechnik bewerkstelligt wird, wobei mindestens eine mit Flüssigkeit gefüllte Mikropipette (5) dazu verwendet wird, den Mutterbehälter (2) in die Tochterbehälter (3) zu ziehen, die miteinander durch ein Nanotube (4) in Kommunikation stehen, wobei die Spitze der Mikropipette (5) in engen Kontakt zur Oberfläche des Mutterbehälters (2) positioniert wird und ein Teil des Mutterbehälters (2) in die Mikropipette (5) angesaugt wird, die dann in eine Richtung weg von dem Mutterbehälter (2) bewegt wird, wobei ein Teil des Mutterbehälters aufgrund des Haftens an dem Substrat in seiner ursprünglichen Position gehalten wird, wodurch ein Tochterbehälter (3) gebildet wird, während der andere Teil des Mutterbehälters (2) den zweiten Tochterbehälter (3) und das verbindende Nanotube (4) bildet, wonach der zweite Tochterbehälter (3) aus der Mikropipette (5) freigesetzt wird.

23. Verfahren gemäß einem der Ansprüche 1-17, wobei das Unterteilen des Mutterbehälters (2) in zwei Tochterbehälter (3) durch die Verwendung einer Mikropipetten-Ansaugtechnik bewerkstelligt wird, wobei der gesamte Mutterbehälter (2) in die mindestens eine mit Flüssigkeit gefüllte Mikropipette (5) angesaugt wird und das Unterteilen des Mutterbehälters (2) durchgeführt wird, indem ein Teil des Mutterbehälters (2) aus der Mikropipette (5) ausgeworfen wird, wodurch an der Spitze der Mikropipette (5) eine knollenartige Struktur gebildet wird, wonach man die knollenartige Struktur durch axiale Translation der Mikropipette (5) an dem Substrat anhaften lässt, wobei die Mikropipette (5) dann in eine Richtung weg von der knollenartigen Struktur bewegt wird, was dazu führt, dass die knollenartige Struktur einen Tochterbehälter (3) und das Nanotube (4) bildet, wonach der Teil des Mutterbehälters (2), der in der Mikropipette (5) zurückbleibt, freigesetzt wird, wodurch der zweite Tochterbehälter (3) gebildet wird.

24. Verfahren gemäß Anspruch 23, wobei der Mutterbehälter (2) durch das rückseitige Ende der Mikropipette (5) in die Mikropipette (5) angesaugt wird.

25. Verfahren gemäß einem der Ansprüche 1-17, wobei das Unterteilen durch die Verwendung einer Elektroinjektionstechnik bewerkstelligt wird, wobei mindestens eine mit Flüssigkeit gefüllte Mikropipette (5) dazu verwendet wird, den Mutterbehälter (2) in zwei durch das Nanotube (4) in Kommunikation miteinander stehende Tochterbehälter (3) zu ziehen, wobei die Spitze der mindestens einen Mikropipette (5) in den Mutterbehälter (2) eingeführt wird und dann seitwärts bewegt wird, während Flüssigkeit durch die Mikropipette (5) injiziert wird, wobei Flüssigkeit in das Nanotube (4) fließt, was seine Ausdehnung forciert, wodurch am Auslass der Mikropipettenspitze ein Behälter (3) gebildet wird, wobei ein Teil des Mutterbehälters (2) aufgrund des Haftens an dem Substrat in seiner ursprünglichen Position erhalten bleibt, während der andere Teil des Mutterbehälters (2) einen Tochterbehälter (3) und ein Nanotube (4) bildet, das den Mutterbehälter (2) und den Tochterbehälter (3) verbindet, wonach die Mikropipette (5) vom neu gebildeten Tochterbehälter (3) entfernt wird.

26. Verfahren gemäß Anspruch 25, wobei mindestens ein transienter Gleichspannungspuls durch die mindestens eine Mikropipette (5) zur Penetration der Membran des Mutterbehälters (2) angelegt wird.

27. Verfahren gemäß Anspruch 26, wobei der transiente Gleichspannungspuls eine Feldstärke von 0,1 bis 4000 V/cm und eine Dauer von 1 bis 10,000 µs besitzt.

28. Verfahren gemäß einem der Ansprüche 1-27, wobei das Netzwerk heterogen ist.

29. Verfahren gemäß einem der Ansprüche 1-28, wobei das Unterteilen entlang des Äquators des Mutterbehälters (2) durchgeführt wird, was zur Homofission führt.

30. Verfahren gemäß einem der Ansprüche 1-28, wobei das mechanische Spalten entlang eines Breitengrads des Mutterbehälters (2) durchgeführt wird, der sich vom Äquator unterscheidet, was zur Heterofission führt.

31. Verfahren zur Herstellung eines mikroskopischen Netzwerkes aus Behältern und Nanotubes, wobei sowohl die Behälter als auch die Nanotubes aus mindestens einer Tensidmembran gebildet werden, wobei zwei oder mehr gemäß einem der Ansprüche 1-30 hergestellte Netzwerke miteinander verschmolzen werden.

32. Verfahren zur Herstellung eines mikroskopischen Netzwerkes aus Behältern und Nanotubes, wobei sowohl die Behälter als auch die Nanotubes aus mindestens einer Tensidmembran gebildet werden, wobei ein oder mehr einzelne Mutterbehälter (2) zu einem gemäß der Ansprüche 1-31 hergestellten Netzwerk verschmolzen werden.

33. Verfahren gemäß einem der Ansprüche 1-32, das des Weiteren das Verschmelzen von zwei oder mehr Behältern (3), die durch Nanotubes (4) innerhalb des gebildeten Netzwerkes verbunden sind, umfasst.

34. Verfahren gemäß Anspruch 31-33, wobei das Verschmelzen durch Mikroelektrofusion durchgeführt wird.

35. Verfahren gemäß einem der Ansprüche 1-34, das des Weiteren das Ändern der Membranzusammensetzung und/oder des Inhalts einzelner Behälter innerhalb des Netzwerkes umfasst.

36. Verfahren gemäß Anspruch 35, wobei die Änderung durch eine photochemische Technik durchgeführt wird.

37. Verfahren gemäß Anspruch 35, wobei die Änderung durch eine elektrochemische Technik durchgeführt wird.

38. Verfahren gemäß Anspruch 35, wobei die Änderung durch eine Mikroinjektionstechnik durchgeführt wird.

39. Verfahren gemäß Anspruch 35, wobei die Änderung durch eine Elektrofusionstechnik durchgeführt wird.

40. Verfahren gemäß einem der Ansprüche 1-39, wobei in einem Behälter (3) enthaltene Partikel (8) in einen anderen Behälter (3) unter dem Einfluss eines elektrischen Feldes auf das Nanotube (4), das die beiden Behälter verbindet, transportiert werden.

41. Verfahren gemäß einem der Ansprüche 1-39, wobei in einem Behälter (3) enthaltene Partikel (8) in einen anderen Behälter (3) durch Einstellen der Doppelschichtoberflächenspannung transportiert werden.

42. Mikroskopisches Netzwerk aus mindestens zwei Behältern (3), die aus mindestens einer Tensidmembran gebildet worden sind, und mindestens einem Nanotube (4), der aus mindestens einer Tensidmembran gebildet worden ist, wobei das Nanotube (4) die Verbindung zwischen den Behältern (3) bildet.

43. Mikroskopisches Netzwerk aus Behältern und Nanotubes gemäß Anspruch 42, erhältlich durch ein Verfahren gemäß einem der Ansprüche 1-41.

44. Mikroskopisches Netzwerk gemäß Anspruch 42, wobei die Tensidmembran flüssigkristalline Eigenschaften besitzt.

45. Mikroskopisches Netzwerk gemäß einem der Ansprüche 42-44, wobei die Tensidmembran eine Lipidmembran ist.

46. Mikroskopisches Netzwerk gemäß Anspruch 45, wobei die Lipidmembran eine Lipiddoppelschichtmembran ist.

47. Mikroskopisches Netzwerk gemäß Anspruch 45, wobei die Lipidmembran eine Phospholipiddoppelschichtmembran ist.

48. Mikroskopisches Netzwerk gemäß den Ansprüchen 45-47, wobei die Lipidmembran Proteine enthält.

49. Mikroskopisches Netzwerk gemäß einem der Ansprüche 43-48, wobei der Mutterbehälter (2) ein Liposom ist.

50. Mikroskopisches Netzwerk gemäß einem der Ansprüche 43-48, wobei der Mutterbehälter (2) eine biologische Zelle ist.

51. Mikroskopisches Netzwerk gemäß einem der Ansprüche 43-48, wobei der Mutterbehälter (2) eine biologische Organelle ist.

52. Mikroskopisches Netzwerk gemäß einem der Ansprüche 43-48, wobei der Mutterbehälter (2) ein Emulsionströpfchen ist.

53. Mikroskopisches Netzwerk gemäß einem der Ansprüche 43-48, wobei sich einzelne Behälter in Bezug auf Membranzusammensetzung und/oder Inhalte unterscheiden.

54. Mikroskopisches Netzwerk gemäß einem der Ansprüche 42-53, wobei das Netzwerk heterogen ist.

55. Netzwerk, gebildet durch Verschmelzen von mindestens zwei mikroskopischen Netzwerken gemäß einem der Ansprüche 42-54.

56. Verwendung eines Netzwerkes gemäß einem der Ansprüche 42-55 oder eines gemäß einem der Ansprüche 1-41 hergestellten Netzwerkes in einem mikroelektronischen System.

57. Verwendung eines Netzwerkes gemäß einem der Ansprüche 42-55 oder eines gemäß einem der Ansprüche 1-41 hergestellten Netzwerkes in einem mikroelektromechanischen System.

58. Verwendung eines Netzwerkes gemäß einem der Ansprüche 42-55 oder eines gemäß einem der Ansprüche 1-41 hergestellten Netzwerkes in einem Mikrofluidsystem.

59. Verwendung eines Netzwerkes gemäß einem der Ansprüche 42-55 oder eines gemäß einem der Ansprüche 1-41 hergestellten Netzwerkes als ein Templat zum Aufbau einer Metall-, Siliciumdioxid-, Polymer- und/oder Proteinkristallfestkörperstruktur.

60. Verwendung eines Netzwerkes gemäß einem der Ansprüche 42-55 oder eines gemäß einem der Ansprüche 1-41 hergestellten Netzwerkes als ein Modell zum Studium der Membranbiophysik und Zellchemie in Compartments.

61. Verwendung eines Netzwerkes gemäß einem der Ansprüche 42-55 oder eines gemäß einem der Ansprüche 1-41 hergestellten Netzwerkes in einem biologischen Computer.

62. Verwendung eines Netzwerkes gemäß einem der Ansprüche 42-55 oder eines gemäß einem der Ansprüche 1-41 hergestellten Netzwerkes in einem chemischen Computer.

63. Verwendung eines Netzwerkes gemäß einem der Ansprüche 42-55 oder eines gemäß einem der Ansprüche 1-41 hergestellten Netzwerkes in einem mikroanalytischen System.

64. Verwendung eines Netzwerkes gemäß einem der Ansprüche 42-55 oder eines gemäß einem der Ansprüche 1-41 hergestellten Netzwerkes bei der Erzeugung einer künstlichen Zelle.

65. Verwendung eines Netzwerkes gemäß einem der Ansprüche 42-55 oder eines gemäß einem der Ansprüche 1-41 hergestellten Netzwerkes bei der Erzeugung eines zellulären Netzwerkes.

66. Verwendung eines Netzwerkes gemäß einem der Ansprüche 42-55 oder eines gemäß einem der Ansprüche 1-41 hergestellten Netzwerkes in einem chemischen oder physikalischen Sensor.

67. Verwendung gemäß Anspruch 66, wobei der Sensor ein Sensor für das Wirkstoff-Screening ist.

68. Verwendung eines Netzwerkes gemäß einem der Ansprüche 42-55 oder eines gemäß einem der Ansprüche 1-41 hergestellten Netzwerkes in der Robotertechnik.

69. Verwendung gemäß Anspruch 68, wobei die Robotertechnik Mikrorobotertechnik oder Nanorobotertechnik ist.

70. Verwendung eines Netzwerkes gemäß einem der Ansprüche 42-55 oder eines gemäß einem der Ansprüche 1-41 hergestellten Netzwerkes als ein einmolekulares Bauelement.

71. Verwendung eines Netzwerkes gemäß einem der Ansprüche 42-55 oder eines gemäß einem der Ansprüche 1-41 hergestellten Netzwerkes in einer implantierbaren Vorrichtung.

## Revendications

1. Procédé de production d'un réseau microscopique en une, deux ou trois dimensions de contenants et de nanotubes, à la fois lesdits contenants et lesdits nanotubes étant constitués par au moins une membrane de surfactant, ledit procédé comprenant le partitionnement d'un contenant mère (2) placé sur ou dans un substrat en deux contenants filles (3) en communication l'un avec l'autre par un nanotube (4), suivi par le partitionnement de l'un des ou des deux contenants filles (3) résultants donnant de nouveaux contenants filles en communication les uns avec les autres, dans lequel le partitionnement des contenants filles est répété jusqu'à ce qu'un nombre souhaité de contenants soit obtenu.

2. Procédé selon la revendication 1, pour la production d'un réseau microscopique en une dimension, dans lequel lesdits contenants (3) sont placés sur un substrat plat.

3. Procédé selon la revendication 1, pour la production d'un réseau microscopique en deux dimensions, dans lequel lesdits contenants (3) sont placés sur un substrat plat.

4. Procédé selon la revendication 1, pour la production d'un réseau microscopique en trois dimensions, dans lequel lesdits contenants (3) sont placés sur un substrat topographique en trois dimensions.

5. Procédé selon la revendication 1, pour la production d'un réseau microscopique en trois dimensions, dans lequel lesdits contenants (3) sont placés dans un substrat très visqueux.

6. Procédé selon la revendication 5, dans lequel ledit substrat très visqueux est un gel.

7. Procédé selon l'une quelconque des revendications 1 à 6, dans lequel ladite membrane de surfactant a des propriétés liquides cristallines.

8. Procédé selon l'une quelconque des revendications 1 à 7, dans lequel ladite membrane de surfactant est une membrane lipidique.

9. Procédé selon la revendication 8, dans lequel ladite membrane lipidique est une membrane de type bicouche lipidique.

10. Procédé selon la revendication 9, dans lequel ladite membrane de type bicouche lipidique est une membrane de type bicouche phospholipidique.

11. Procédé selon les revendications 8 à 10, dans lequel ladite membrane lipidique contient des protéines.

12. Procédé selon l'une quelconque des revendications 1 à 11, dans lequel ledit contenant mère (2) est un liposome.

13. Procédé selon l'une quelconque des revendications 1 à 11, dans lequel ledit contenant mère (2) est une cellule biologique.

14. Procédé selon l'une quelconque des revendications 1 à 11, dans lequel ledit contenant mère (2) est une organelle biologique.

15. Procédé selon l'une quelconque des revendications 1 à 8, dans lequel ledit contenant mère (2) est une gouttelette d'émulsion, telle qu'une gouttelette d'émulsion huile-dans-l'eau.

16. Procédé selon l'une quelconque des revendications 1 à 15, dans lequel le diamètre dudit nanotube (4) est contrôlé par la régulation de la tension de membrane du réseau.

17. Procédé selon l'une quelconque des revendications 1 à 15, dans lequel le diamètre dudit nanotube (4) est contrôlé par la variation du module de flexion de la membrane par contrôle de la composition de la membrane.

18. Procédé selon l'une quelconque des revendications 1 à 17, dans lequel ledit partitionnement est réalisé par une fission mécanique essentiellement dans la totalité du contenant mère (2), et dans lequel ledit nanotube (4) est formé par le matériau non clivé du contenant mère (2).

19. Procédé selon la revendication 18, dans lequel ladite fission mécanique est réalisée par l'utilisation d'une microfibre flexible (1), telle qu'une fibre de carbone.

20. Procédé selon la revendication 19, dans lequel après la fission mécanique, le nanotube formé (4) est allongé par le mouvement de ladite fibre de carbone (1).

21. Procédé selon l'une quelconque des revendications 18 à 20, dans lequel les tailles des contenants (3) formés par la fission mécanique sont contrôlées par le positionnement de ladite fibre de carbone (1) avant ladite fission mécanique.

22. Procédé selon l'une quelconque des revendications 1 à 17, dans lequel ledit partitionnement dudit contenant mère (2) en contenants filles (3) est réalisé par l'utilisation d'une technique d'aspiration par micropipette dans laquelle au moins une micropipette (5) remplie de liquide est utilisée pour séparer le contenant mère (2) en les contenants filles (3) qui sont en communication les uns avec les autres par un nanotube (4), dans lequel la pointe de ladite micropipette (5) est positionnée en contact étroit avec la surface dudit contenant mère (2) et une partie dudit contenant mère (2) est aspirée dans ladite micropipette (5), qui est alors déplacée dans une direction à l'écart du contenant mère (2), une partie dudit contenant mère (2) étant conservée dans sa position originale en raison de l'adhérence audit substrat formant ainsi un contenant fille (3) alors que l'autre partie dudit contenant mère (2) forme le second contenant fille (3) et le nanotube de connexion (4), après quoi ledit second contenant fille (3) est libéré de ladite micropipette (5).

23. Procédé selon l'une quelconque des revendications 1 à 17, dans lequel ledit partitionnement dudit contenant mère (2) en contenants filles (3) est réalisé par l'utilisation d'une technique d'aspiration par micropipette dans laquelle la totalité du contenant mère (2) est aspirée dans la au moins une micropipette (5) remplie de liquide et le partitionnement du contenant mère (2) est réalisé par éjection d'une partie du contenant mère (2) de la micropipette (5), formant ainsi une structure bulbeuse au niveau de la pointe de ladite micropipette (5), après quoi on laisse la structure bulbeuse adhérer audit substrat par une translation axiale de ladite micropipette (5) qui est alors déplacée dans une direction à l'écart de ladite structure bulbeuse résultant en la formation par la structure bulbeuse d'un contenant fille (3) et du nanotube (4), après quoi la partie du contenant mère (2) restant dans la micropipette (5) est libérée, formant ainsi le second contenant fille (3).

24. Procédé selon la revendication 23, dans lequel le contenant mère (2) est aspiré dans la micropipette (5) par l'extrémité arrière de la micropipette (5).

25. Procédé selon l'une quelconque des revendications 1 à 17, dans lequel ledit partitionnement est réalisé par l'utilisation d'une technique d'électroinjection dans laquelle au moins une micropipette (5) remplie de liquide est utilisée pour séparer le contenant mère (2) en les deux contenants filles (3) en communication l'un avec l'autre par ledit nanotube (4), dans lequel la pointe de ladite au moins une micropipette (5) est insérée dans ledit contenant mère (2) puis est déplacée de manière latérale alors que le liquide est injecté dans ladite micropipette (5), ledit liquide s'écoulant dans ledit nanotube (4), le forçant à se déployer, formant ainsi un contenant (3) à la sortie de la pointe de la micropipette, une partie dudit contenant mère (2) étant conservée dans sa position originale en raison de l'adhérence audit substrat alors que l'autre partie dudit contenant mère (2) forme un contenant fille (3) et un nanotube (4) connectant ledit contenant mère (2) et ledit contenant fille (3), après quoi ladite micropipette (5) est retirée du contenant fille (3) nouvellement formé.

26. Procédé selon la revendication 25, dans lequel au moins une impulsion temporaire de tension continue est appliquée par ladite au moins une micropipette (5) pour la pénétration de la membrane dudit contenant mère (2).

27. Procédé selon la revendication 26, dans lequel ladite impulsion temporaire de courant continu a une intensité de champ de 0,1 à 4000 V/cm et une durée de 1 à 10 000 µs.

28. Procédé selon l'une quelconque des revendications 1 à 27, dans lequel ledit réseau est hétérogène.

29. Procédé selon l'une quelconque des revendications 1 à 28, dans lequel ledit partitionnement est réalisé le long de l'équateur du contenant mère (2) résultant en une homofission.

30. Procédé selon l'une quelconque des revendications 1 à 28, dans lequel ladite fission mécanique est réalisée le long d'une latitude autre que l'équateur du contenant mère (2) résultant en une hétérofission.

31. Procédé de production d'un réseau microscopique de contenants et de nanotubes, à la fois lesdits contenants et lesdits nanotubes étant constitués d'au moins une membrane de surfactant, dans lequel deux réseaux ou plus produits selon l'une quelconque de revendications 1 à 30 sont fusionnés ensemble.

32. Procédé de production d'un réseau microscopique de contenants et de nanotubes, à la fois lesdits contenants et lesdits nanotubes étant constitués par au moins une membrane de surfactant, dans lequel un ou plusieurs contenants mères (2) solitaires sont fusionnés en un réseau produit selon l'une quelconque des revendications 1 à 31.

33. Procédé selon l'une quelconque des revendications 1 à 32, comprenant en outre une fusion de deux contenants (3) ou plus connectés par des nanotubes (4) à l'intérieur du réseau formé.

34. Procédé selon les revendications 31 à 33, dans lequel ladite fusion est réalisée par une microélectrofusion.

35. Procédé selon l'une quelconque des revendications 1 à 34, comprenant en outre l'altération de la teneur et/ou de la composition de la membrane de contenants individuels à l'intérieur du réseau.

36. Procédé selon la revendication 35, dans lequel ladite altération est réalisée par une technique photochimique.

37. Procédé selon la revendication 35, dans lequel ladite altération est réalisée par une technique électrochimique.

38. Procédé selon la revendication 35, dans lequel ladite altération est réalisée par une technique de microinjection.

39. Procédé selon la revendication 35, dans lequel ladite altération est réalisée par une technique d'électrofusion.

40. Procédé selon l'une quelconque des revendications 1 à 39, dans lequel les particules (8) contenues dans un contenant (3) sont transportées à un autre contenant (3) par l'influence d'un champ électrique sur le nanotube (4) connectant les deux contenants.

41. Procédé selon l'une quelconque des revendications 1 à 39, dans lequel les particules (8) contenues dans un contenant (3) sont transportées jusqu'à un autre contenant (3) par ajustement de la tension superficielle de la bicouche.

42. Réseau microscopique d'au moins deux contenants (3) constitués par au moins une membrane de surfactant et au moins un nanotube (4) constitué par au moins une membrane de surfactant, ledit nanotube (4) formant une communication entre lesdits contenants (3).

43. Réseau microscopique de contenants et de nanotubes selon la revendication 42 pouvant être obtenu par un procédé selon l'une quelconque des revendications 1 à 41.

44. Réseau microscopique selon la revendication 42, dans lequel ladite membrane de surfactant a des propriétés liquides cristallines.

45. Réseau microscopique selon l'une quelconque des revendications 42 à 44, dans lequel ladite membrane de surfactant est une membrane lipidique.

46. Réseau microscopique selon la revendication 45, dans lequel ladite membrane lipidique est une membrane de type bicouche lipidique.

47. Réseau microscopique selon la revendication 45, dans lequel ladite membrane lipidique est une membrane de type bicouche phospholipidique.

48. Réseau microscopique selon les revendications 45 à 47, dans lequel ladite membrane lipidique contient des protéines.

49. Réseau microscopique selon l'une quelconque des revendications 43 à 48, dans lequel ledit contenant mère (2) est un liposome.

50. Réseau microscopique selon l'une quelconque des revendications 43 à 48, dans lequel ledit contenant mère (2) est une cellule biologique.

51. Réseau microscopique selon l'une quelconque des revendications 43 à 48, dans lequel ledit contenant mère (2) est une organelle biologique.

52. Réseau microscopique selon l'une quelconque des revendications 43 à 48, dans lequel ledit contenant mère (2) est une gouttelette d'émulsion.

53. Réseau microscopique selon l'une quelconque des revendications 43 à 48, dans lequel les contenants (3) individuels sont différenciés relativement au contenu et/ou à la composition de la membrane.

54. Réseau microscopique selon l'une quelconque des revendications 42 à 53, dans lequel ledit réseau est hétérogène.

55. Réseau formé par fusion d'au moins deux réseaux microscopiques selon l'une quelconque des revendications 42 à 54.

56. Utilisation d'un réseau selon l'une quelconque des revendications 42 à 55 ou d'un réseau produit selon l'une quelconque des revendications 1 à 41 dans un système microélectronique.

57. Utilisation d'un réseau selon l'une quelconque des revendications 42 à 55 ou d'un réseau produit selon l'une quelconque des revendications 1 à 41 dans un système microélectromécanique.

58. Utilisation d'un réseau selon l'une quelconque des revendications 42 à 55 ou d'un réseau produit selon l'une quelconque des revendications 1 à 41 dans un système microfluidique.

59. Utilisation d'un réseau selon l'une quelconque des revendications 42 à 55 ou d'un réseau produit selon l'une quelconque des revendications 1 à 41 en tant qu'une matrice pour la construction d'une structure à l'état solide en métal, silice, polymère et/ou cristal de protéine.

60. Utilisation d'un réseau selon l'une quelconque des revendications 42 à 55 ou d'un réseau produit selon l'une quelconque des revendications 1 à 41 en tant qu'un modèle pour l'étude de la biophysique de la membrane et de la chimie cellulaire dans les compartiments.

61. Utilisation d'un réseau selon l'une quelconque des revendications 42 à 55 ou d'un réseau produit selon l'une quelconque des revendications 1 à 41 dans un ordinateur biologique.

62. Utilisation d'un réseau selon l'une quelconque des revendications 42 à 55 ou d'un réseau produit selon l'une quelconque des revendications 1 à 41 dans un ordinateur chimique.

63. Utilisation d'un réseau selon l'une quelconque des revendications 42 à 55 ou d'un réseau produit selon l'une quelconque des revendications 1 à 41 dans un système microanalytique.

64. Utilisation d'un réseau selon l'une quelconque des revendications 42 à 55 ou d'un réseau produit selon l'une quelconque des revendications 1 à 41 dans la création d'une cellule artificielle.

65. Utilisation d'un réseau selon l'une quelconque des revendications 42 à 55 ou d'un réseau produit selon l'une quelconque des revendications 1 à 41 dans la création d'un réseau cellulaire.

66. Utilisation d'un réseau selon l'une quelconque des revendications 42 à 55 ou d'un réseau produit selon l'une quelconque des revendications 1 à 41 dans un capteur chimique ou physique.

67. Utilisation selon la revendication 66, dans laquelle ledit capteur est un capteur destiné au criblage de médicaments.

68. Utilisation d'un réseau selon l'une quelconque des revendications 42 à 55 ou d'un réseau produit selon l'une quelconque des revendications 1 à 41 en robotique.

69. Utilisation selon la revendication 68, dans laquelle ladite robotique est la microrobotique ou la nanorobotique.

70. Utilisation d'un réseau selon l'une quelconque des revendications 42 à 55 ou d'un réseau produit selon l'une quelconque des revendications 1 à 41 en tant qu'un dispositif à molécule unique.

71. Utilisation d'un réseau selon l'une quelconque des revendications 42 à 55 ou d'un réseau produit selon l'une quelconque des revendications 1 à 41 dans un dispositif implantable.
